(19) Europäisches Patentamt
European Patent Office
Office européen des brevets

(11) **EP 4 009 513 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **21206897.7**

(22) Anmeldetag: **15.08.2019**

(51) Internationale Patentklassifikation (IPC):
***H02P 21/28*** (2016.01)   ***H02P 6/18*** (2016.01)
***H02P 6/185*** (2016.01)

(52) Gemeinsame Patentklassifikation (CPC):
**H02P 6/183; H02P 6/185; H02P 21/28;**
H02P 2207/05

(54) **VERFAHREN UND VORRICHTUNG ZUR REGELUNG EINER SYNCHRONMASCHINE OHNE LAGEGEBER MITTELS EINDEUTIGER ZUORDNUNG DER ADMITTANZ ODER INDUKTIVITÄT ZUR ROTORLAGE**

METHOD AND DEVICE FOR CONTROLLING A SYNCHRONOUS MACHINE WITHOUT A POSITION SENSOR BY MEANS OF A UNIQUE ALLOCATION OF THE ADMITTANCE OR INDUCTIVITY TO THE ROTOR POSITION

PROCÉDÉ ET DISPOSITIF DE RÉGULATION D'UNE MACHINE SYNCHRONE SANS CAPTEUR DE POSITION AU MOYEN D'UNE AFFECTATION UNIQUE DE L'ADMITTANCE OU DE L'INDUCTANCE À LA POSITION DU ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2018 DE 102018006547**
**22.08.2018 DE 102018006657**

(43) Veröffentlichungstag der Anmeldung:
**08.06.2022 Patentblatt 2022/23**

(62) Dokumentnummer(n) der früheren Anmeldung(en) nach Art. 76 EPÜ:
**19755373.8 / 3 837 763**

(73) Patentinhaber: **KOSTAL Drives Technology GmbH**
**58513 Lüdenscheid (DE)**

(72) Erfinder:
• **LANDSMANN, Peter**
**80809 München (DE)**
• **KÜHL, Sascha**
**81671 München (DE)**
• **PAULUS, Dirk**
**81669 München (DE)**

(74) Vertreter: **Kerkmann, Detlef**
**Leopold Kostal GmbH & Co. KG**
**An der Bellmerei 10**
**58513 Lüdenscheid (DE)**

(56) Entgegenhaltungen:
**DE-A1- 102016 102 635**

• **HAMMEL WOLFGANG ET AL: "Operating point dependent anisotropies and assessment for position-sensorless control", 2016 18TH EUROPEAN CONFERENCE ON POWER ELECTRONICS AND APPLICATIONS (EPE'16 ECCE EUROPE), 1 September 2016 (2016-09-01), pages 1 - 10, XP055914649, DOI: 10.1109/ EPE.2016.7695509**

**Beschreibung**

Die Erfindung betrifft ein Verfahren zur Zuordnung der Induktivität oder Admittanz zur Rotorlage einer Synchronmaschine, umfassend einen Stator und einen Rotor mit oder ohne Permanentmagnete, wobei die Synchronmaschine über getaktete Klemmspannungen angesteuert und aus diesen und der gemessenen Stromantwort die Induktivität bzw. Admittanz berechnet wird, sowie eine Vorrichtung zur Steuerung und Regelung einer Drehfeldmaschine, die zur Durchführung eines solchen Verfahrens eingerichtet und ausgebildet ist.

Verfahren, die eine effiziente Regelung einer Synchronmaschine ohne Lagegeber ermöglichen (häufig als "geberlose" oder "sensorlose" Regelung bezeichnet) werden in 2 Klassen unterteilt:

1. Grundwellenverfahren werten die unter Bewegung induzierte Spannung aus, liefern bei mittleren und hohen Drehzahlen sehr gute Signal-Eigenschaften, aber versagen im unteren Drehzahlbereich, insbesondere bei Stillstand.

2. Anisotropie-basierte Verfahren werten die Lageabhängigkeit der Induktivität der Maschine aus, wozu keine Drehzahl notwendig ist, aber weisen mehrere Probleme und Hürden auf, die erklären, warum viele Anwendungen bis heute einen Lagegeber (mit seinen Nachteilen) benötigen.

Anisotropie-basierte Verfahren lassen sich weiterhin in 2 Stufen unterteilen. Die erste Stufe ist die Anisotropie-Identifikation, die aus der eingespeisten Spannung und der resultierenden Stromantwort, die Komponenten des Anisotropie-Vektors berechnet. Beispiele für diese Stufe betreffende Verfahren finden sich in [1], [2], [3], [4], [5]. Die zweite Stufe ist die Rotorlage-Zuordnung, in welcher dem gemessenen Anisotropie-Vektor eine Rotorlage zugeordnet wird. Beispiele hierfür finden sich in [6] [7] [8] [9].

Obgleich Anisotropie-basierte Verfahren seit 1988 existieren [1] [10] [11] [12], gab es bis 2004 keinen Vorschlag mit Rotorlagezuordnung. Sättigung und Harmonische wurden vernachlässigt und der gemessene/berechnete Anisotropiewinkel direkt als Rotorlagewert zur Regelung rückgeführt.

Seit 2005 gibt es Veröffentlichungen, die eine Lastabhängigkeit der Anisotropie aufdeckten [7] [13]. Darin beschrieben ist einerseits, dass ihre Orientierung sich relativ zum Rotor verschiebt, was fortan mittels einer entsprechenden Kennlinie im Betrieb kompensiert wurde [14] [15] [16] [17]. Solche Kompensationsmethoden können als erste Verfahren zur Anisotropie-Rotorlage-Zuordnung betrachtet werden. Darin beschrieben ist weiterhin, dass der Betrag der Anisotropie ($L_d - L_q$) sinkt, wodurch sich die Lageinformation reduziert oder möglicherweise verloren geht.

Seit 2007 wurde die Anisotropie-Verschiebung zusätzlich abhängig von der Rotorlage in Form von Harmonischen beschrieben [8], welche fortan kompensiert [18] [19] oder ausgewertet [6] [20] wurden. Beide Ansätze können als erweiterte Anisotropie-Rotorlage-Zuordnung betrachtet werden und führen hauptsächlich zu einer verbesserten Genauigkeit.

Hinsichtlich des oben beschrieben Phänomens der unter Last schwindenden Anisotropie wurden ab 2013 Ansätze vorgeschlagen [9] [21], die Effizienz- oder Leistungs-optimalen Sollstromtrajektorien (z.B. MTPA) so zu verändern, dass kritische Punkte mit verschwindender Anisotropie umfahren werden. Derartige Ansätze versprechen aber nur mäßigen Erfolg, weil das tatsächliche Problem nicht das Verschwinden der Anisotropie ist, sondern, wie in [22] erläutert, ein komplexeres, welches nach dem Umfahren der kritischen Punkte weiterhin existiert.

Die Ansätze [23], [24] und [25] versuchen dieses Problem zu überwinden, indem sie basierend auf einer herkömmlichen Rotorlagezuordnung zusätzlich berücksichtigen, dass das Entstehen eines Schätzfehlers (erwartungsgemäß) zum Einprägen eines falschen Stroms führt und darauf basierend eine Schätzfehler-Korrekturvorschrift aufstellen, die verbesserte Stabilitätseigenschaften zeigt. Aber auch in diesen Verfahren ist das zugrundeliegende Modell weiterhin nicht losgelöst von den im Schätzbetrieb unbekannten Rotorkoordinaten und kann damit keine vollständig eindeutige Rotorlagezuordnung ermöglichen.

Die deutsche Offenlegungsschrift DE 10 2016 102 635 A1 offenbart ein Verfahren zur Berechnung der Rotorlage durch die Statorströme in Abhängigkeit der Last. Die gemessenen Statorströme werden dabei in ein statorfestes Koordinatensystem transformiert und daraus Komponenten des Admittanz-Vektors bestimmt.

Die IEEE - Veröffentlichung "Compensation for Rotor Position Estimation Error due to Cross-Coupling Magnetic Saturation in Signal Injection bases Sensorless Control of PM Brushless AC Motors" von Z. Q. Zhu et al. (IEEE, Piscataway, NJ, USA, 1. Mai 2007, Seiten 208 - 213, XP031114836) offenbart ebenfalls die Rotorlageschätzung unter Berücksichtigung der Last, wobei eine Koordinatentransformation in ein rotorfestes Koordinatensystem vorgenommen wird.

Es folgt eine allgemeine Erläuterung, auch betreffend fakultative Ausgestaltungen der Erfindung. Dabei zeigen:

Fig. 1    Herkömmliche Anisotropie-Trajektorien ohne Last (links), mit Last (mitte) und ein kritischer Verlauf (rechts), jeweils mit Kennzeichnung des 0°-Punktes (kleiner Kreis

Fig. 2    Blockschaltbild des 2-stufigen Aufbaus herkömmlicher Anisotropie-basierter Verfahren mit Transformation des Stromes in geschätzte Rotorkoordinaten

Fig. 3    Herkömmliche Anisotropie-Trajektorien mit Stromwinkelabhängigkeit bei fester Rotorlage

Fig. 4    Herkömmliche Anisotropie-Trajektorien mit Stromabhängigkeit bei fester Rotorlage und Lageabhängigkeit bei Stator-festem Strom

Fig. 5    Blockschaltbild des 2-stufigen Aufbaus eines Anisotropie-basierten Verfahrens mit SFC-basierter Rotorlage-Zuordnung, ohne Transformation des Stromes in geschätzte Rotorkoordinaten

Fig. 6    Zuordnung eines gemessenen Anisotropievektors $\tilde{y}_\Delta^s$ zum naheliegendsten Punkt derjenigen SFC-Trajektorie, die für den beispielsweise aktuell gemessenen Stromvektor $i_1^s$ gültig ist.

Fig. 7    SFC Trajektorien für alle Stromrichtungen in Stator- und in Doppel-Strom-Koordinaten

Fig. 8    Verlauf des isotropen Anteils unter RFC und SFC Bedingungen mit Last

Fig. 9    Verlauf des isotropen Anteils über dem Strombetrag für verschiedene Maschinentemperaturen

Fig. 10   Einfluss der PM-Temperatur auf die RFC und SFC Trajektorien

Fig. 11   Lageschätzung (links-oben) und die Komponenten der Anisotropie jeweils über der Zeit in Sekunden (links-mittig und -unten) und als Ortskurve (rechts) dargestellt

Fig. 12   Lageschätzung (oben), q-Strom-Rampe bezogen auf Nennstrom (mittig) und Schätzfehler (unten) über der Zeit in Sekunden

Fig. 13   Geschätzte Rotorlage (oben), Gewichtungsverhältnis (mitte) und Schätzfehler (unten) über der Zeit in Sekunden

Der Begriff "Maschine" wird hier im Sinne einer "elektrischen Maschine" also eines Elektromotors oder eines elektrischen Generators verwendet.

Die Admittanz Y einer Synchronmaschine entspricht für hochfrequente Anregung näherungsweise der inversen Induktivität L, welche bei magnetisch anisotropem Verhalten beide als Matrix zu beschreiben sind

$$Y_s^s \approx L_s^{s-1}. \tag{1}$$

Das Superskript steht dabei für das Koordinatensystem (KS), in diesem Fall Statorkoordinaten; das Subskript beschreibt die Größe näher, in diesem Fall den Bezug der Größe zur Statorwicklung. Die Admittanz beschreibt die Überführung eines anregenden Spannungsvektors $u_s^s$ in eine Stromantwort $\Delta i_s^s$

$$\Delta i_s^s = Y_s^s u_s^s \Delta t, \tag{2}$$

$$\begin{bmatrix} \Delta i_\alpha \\ \Delta i_\beta \end{bmatrix} = \begin{bmatrix} Y_{\alpha\alpha} & Y_{\alpha\beta} \\ Y_{\beta\alpha} & Y_{\beta\beta} \end{bmatrix} \begin{bmatrix} u_\alpha \\ u_\beta \end{bmatrix} \Delta t, \tag{3}$$

worin $\Delta t$ die Zeit ist, in der die Spannung $u_s^s$ anlag und $\Delta i$ die Differenz zwischen Stromwerte $i_s^s$ vor und nach dieser Zeit ist. Wenn die Welle rotiert, kommen in (2) noch weitere Störterme hinzu, die im Rahmen der Anisotropie-Identifikation kompensiert werden müssen.

Die Anisotropie-Identifikation kann alternativ auch die Induktivität $L_s^s$ ermitteln

$$u_s^s = L_s^s \frac{\Delta i_s^s}{\Delta t}, \tag{4}$$

welche äquivalente Anisotropie-Informationen enthält und damit auf gleiche Weise einer Rotorlage zugeordnet werden kann. Diese Herleitung erfolgt jedoch am Beispiel einer identifizierten Admittanz $Y_s^s$.

Ziel der Anisotropie-Identifikation ist es nun, aus dem Verlauf der anregenden Spannung $u_s^s$ (z.B. Injektion) und der resultierenden Stromantwort $i_s^s$ auf die magnetische Anisotropie zu schließen - namentlich auf den sog. Anisotropievektor $y_\Delta^s$, dessen Einträge eine Linearkombination bestimmter Komponenten der Admittanzmatrix $Y_s^s$ sind

$$y_\Delta^s = \begin{bmatrix} y_{\Delta\alpha} \\ y_{\Delta\beta} \end{bmatrix} = \frac{1}{2}\begin{bmatrix} Y_{\alpha\alpha} - Y_{\beta\beta} \\ Y_{\alpha\beta} + Y_{\beta\alpha} \end{bmatrix}. \tag{5}$$

Dieser Vektor $y_\Delta^s$ zeigt bei vielen Maschinen eine deutliche Rotorlage-Abhängigkeit. Analog wären noch zwei weitere Linearkombinationen möglich

$$Y_\Sigma = \frac{Y_{\alpha\alpha} + Y_{\beta\beta}}{2} \tag{6}$$

$$Y_e = \frac{Y_{\alpha\beta} - Y_{\beta\alpha}}{2}, \tag{7}$$

welche aber aus Sicht der bisherigen Verfahren nicht genügend Lageabhängigkeit aufweisen.

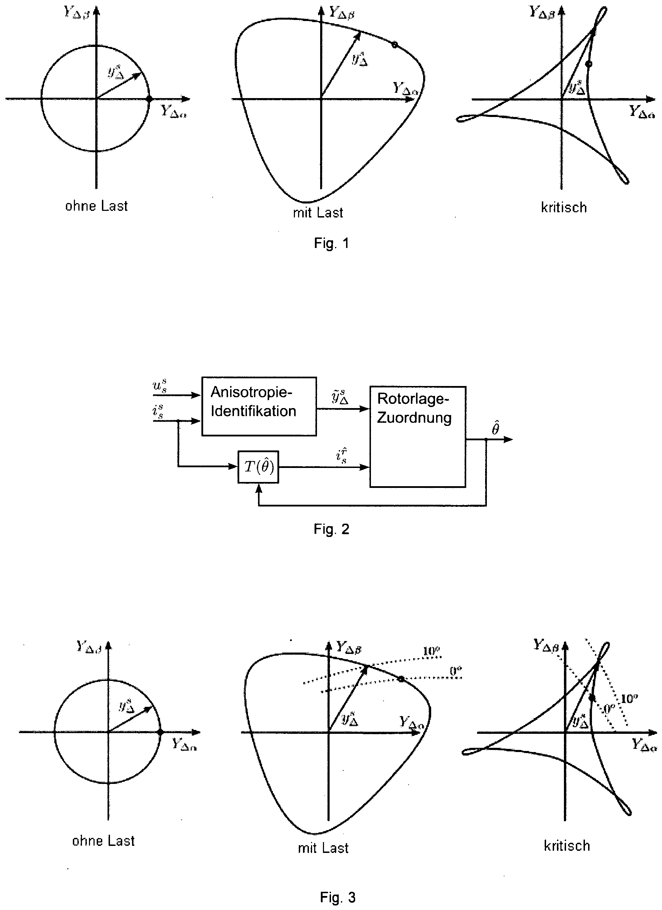

Der Anisotropie-Vektor bewegt sich bei Drehung des Rotors üblicherweise auf Trajektorien, die ähnlich zu denen in Fig. 1 sind.

Der kleine Kreis markiert den Punkt jeder Trajektorie mit der 0° Rotorlage. Der Vektor $y_\Delta^s$ jeweils auf einen Punkt der Trajektorie Position mit ca. 10° Rotorlage und durchläuft jede Trajektorie zweimal pro elektrischer Rotordrehung.

Links ist ein Fall ohne Last mit Null-Strom abgebildet. Die Anisotropie ist exakt mit dem Rotor ausgerichtet, weshalb der 0°-Punkt auf der $Y_{\Delta\alpha}$-Achse liegt. Es existieren keine Anisotropie-Harmonischen, weshalb die Trajektorie kreisförmig ist.

Mittig ist ein Fall mit hoher Last, also hohem Strombetrag dargestellt, wo die Anisotropieausrichtung gegenüber der Rotorlage verschoben ist (0°-Punkt liegt schräg) und sich Anisotropie-Harmonische ausgebildet haben (Trajektorie nicht kreisförmig). Für die Verschiebung und die Harmonischen gibt es Ansätze zur Kompensation [18] [19] oder zur Ausnutzung [6] [20], die jeweils das Ziel haben, dem gemessenen Anisotropievektor $y_\Delta^s$ die entsprechende Rotorlage zuzuordnen.

Rechts ist ein kritischer Verlauf der Anisotropie-Trajektorie unter Last dargestellt, wie er bei modernen Maschinen mit konzentrierten Wicklungen vermehrt auftritt. Der Verlauf ist kritisch, weil in den Spitzen der Trajektorie Punkte mehrerer Rotorlagen aufeinander fallen (Mehrdeutigkeit) und weil der Verlauf dort nahezu stagniert und in sich zurück läuft (geringer Signalanteil). Für viele Verfahren ist zudem der Fakt kritisch, dass der Winkel von $y_\Delta^s$ beim Durchlaufen der Trajektorie stellenweise rückwärts (d.h. nicht monoton) verläuft.

Zusammenfassend lassen sich Anisotropie-basierte Verfahren in 2 Stufen unterteilen, die in Fig. 2 dargestellt sind. Die erste Stufe ist die Anisotropie-Identifikation, die aus der eingespeisten Spannung und der gemessenen Stromantwort, die Komponenten des Anisotropie-Vektors berechnet. Dieser auf Basis der aktuellen Messung berechnete Anisotropie-Vektor wird als gemessener Anisotropie-Vektor $\tilde{y}_\Delta^s$ bezeichnet und enthält im Kontrast zur physikalischen Maschineneigenschaft $y_\Delta^s$ beispielsweise typische Messfehler wie Rauschen etc. Die zweite Stufe ist die Rotorlage-Zuordnung, in welcher dem gemessenen Anisotropie-Vektor $\tilde{y}_\Delta^s$ ein Rotorlageschätzwert $\hat{\theta}$ zugeordnet wird.

Die zweite Stufe Anisotropie-basierter Verfahren, d.h. die Rotorlage-Zuordnung kann unter Last zu Uneindeutigkeit und damit zur Instabilität der Verfahren führen. Die Ursache hierfür ist, dass herkömmliche Verfahren zur Rotorlage-Zuordnung direkt oder indirekt auf den Anisotropie-Trajektorien in Fig. 1 basieren, die jeweils immer für einen bestimmten Strom in Rotorkoordinaten $i_s^r$ gelten. Im geberlosen Betrieb werden die Rotorkoordinaten jedoch geschätzt, wodurch lediglich der Betrag des Stroms $|i_s^r| = |i_s^s|$ durch Messung bekannt und der Stromwinkel in Rotorkoordinaten $\angle i_s^r$ genau genommen nicht bekannt ist.

Der Anisotropievektor $y_\Delta^s$ hängt jedoch nicht nur vom Rotorwinkel $\theta$ und Strombetrag $|i_s^r|$ ab, sondern

faktisch ebenfalls vom Stromwinkel $\angle i_s^r$

$$y_\Delta^s = f_\angle(\theta, |i_s^r|, \angle i_s^r) \tag{8}$$

Wird der Winkel $\angle i_s^r$ in (8) als unsicher/fehlerbehaftet angenommen, ergeben sich für eine feste Rotorposition $\theta$ und einen festen Strombetrag $|i_s^r|$ die in Fig. 3 gepunktet dargestellten möglichen Orte des Anisotropievektors $y_\Delta^s$. Anders beschrieben, ergeben sich die gepunkteten Trajektorien, wenn man in den zwei zuvor beschrieben Betriebspunkten (0°-Punkt und Vektor $y_\Delta^{s}$) den Stromwinkel in Rotorkoordinaten $\angle i_s^r$ variiert.

Bei Nullstrom (linke Anisotropie-Trajektorie) ist der Stromwinkel irrelevant, wodurch die gepunkteten Linien als Kreise ohne Radius, d.h. punktförmig im 0°-Punkt bzw. in der Spitze von $y_\Delta^s$ liegen. Eine Rotorlage-Zuordnung ist auch ohne Kenntnis des Stromwinkels eindeutig.

Unter Bestromung jedoch verlaufen die gepunkteten Linien ähnlich wie in Fig. 3 mittig und rechts dargestellt. Mit zunehmendem Strombetrag verlaufen diese Linien immer stärker in Richtung des Verlaufs der Anisotropie-Trajektorie, wodurch ein (aufgrund eines Schätzfehlers) falsch eingeprägter Strom in einem zunehmenden Schätzfehler resultiert. Das macht die Rotorlage-Zuordnung uneindeutig und oberhalb einer bestimmten Lastgrenze instabil.

Es wird ein Verfahren zur Zuordnung der Induktivität oder Admittanz zur Rotorlage einer Synchronmaschine, umfassend einen Stator und einen Rotor mit oder ohne Permanentmagnete vorgestellt. Die Synchronmaschine wird über getaktete Klemmspannungen angesteuert und es wird aus diesen und der gemessenen Stromantwort die Induktivität bzw. Admittanz berechnet. In dem Verfahren wird der Verlauf der Induktivität bzw. Admittanz über der Rotordrehung unter der Randbedingung eines in Statorkoordinaten unveränderten, mindestens zweidimensionalen Stromvektors als Schlüsselinformation zur Lagezuordnung verwendet.

Der Zusammenhang (8) ist prinzipiell nicht uneindeutig. Das bisherige Problem liegt namentlich darin begründet, dass die Modellierung $f_\angle(\cdot)$ in einem Koordinatensystem (Rotor) erfolgt, dessen Ausrichtung im geberlos Betrieb nicht bekannt (z.B. konstant oder direkt messbar) ist und folglich durch eine Annahme ersetzt wird.

Die Lösung der Mehrdeutigkeits- und Stabilitätsproblematik liegt nun darin, ein vollständiges (d.h. von einer Winkel- und mindestens zwei Strom-Dimensionen abhängiges) Anisotropie-Modell zu wählen, dessen Eingangsgrößen alle messbar sind. Hierfür wird der Stromvektor in Statorkoordinaten $i_s^s$ als Eingangsgröße verwendet

$$y_\Delta^s = f_s(\theta, i_s^s). \tag{9}$$

Das Anisotropie-Modell $f_s(\cdot)$ enthält die gleichen Informationen wie $f_\angle(\cdot)$ und beide lassen sich per Transformation in einander überführen. Jedoch sind diesmal mit Ausnahme von $\theta$ (dem späteren Rechenergebnis) alle in (9) enthaltenen Größen direkt messbar - $i_s^s$ durch die Stromsensorik plus fixer Clarke Transformation und $y_\Delta^s$ durch die Anisotropie-Identifikation (d.h. Strommessung und gestellte Spannung) als $\tilde{y}_\Delta^s$.

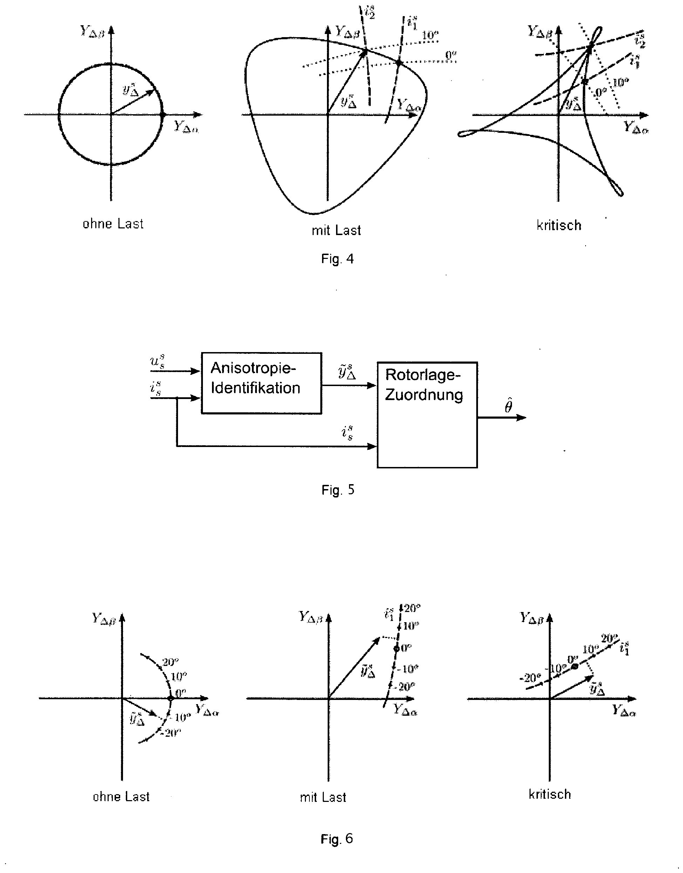

Die gestrichelten Trajektorien in Fig. 4 veranschaulichen die Modellierung mit $f_s(\cdot)$.

Während die herkömmliche Anisotropie-Trajektorie den Verlauf der Anisotropie bei Rotor-fest eingeprägtem Strom (kurz RFC für rotor-frame fixed current) beschreibt, beschreiben die gestrichelten Linien den Verlauf bei Stator-fest eingeprägtem Strom (kurz SFC für stator-frame fixed current). Die RFC Anisotropie-Trajektorien zeigen jeweils eine volle Umdrehung, während von den SFC Trajektorien jeweils nur einen Ausschnitt von ca. $\pm 20°$ um den Maximum-Troque-per-Ampere(MTPA)-Betriebspunkt dargestellt ist.

Weil irrelevant ist, ob Nullstrom rotor- oder statorfest eingeprägt wird, sind im linken Teil von Fig. 4 die SFC Trajektorien identisch zur RFC Trajektorie. Je größer der Strombetrag, desto stärker weichen beide Trajektorien voneinander ab. Beide Trajektorien kreuzen sich immer im Sollstrompunkt (z.B. MTPA), wobei die SFC Trajektorie mit zunehmendem Strombetrag von dort aus immer stärker verdreht heraus verläuft. In dieser verdrehten Richtung liegt der tatsächlich verfügbare (nicht scheinbare), eindeutige und stabile geberlose Informationsgehalt.

Darüber hinaus wird im rechten Teil von Fig. 4 ersichtlich, dass die uneindeutigen Bereiche der kritischen RFC Trajektorie unter Betrachtung mit Stator-festem Strom monotone und damit eindeutige zuordenbare Verläufe annehmen.

Zur Gewinnung eines solchen Modells $f_s(\cdot)$ eignet sich beispielsweise die magnetische Simulation (z.B. Finite Elemente Methoden) oder eine Prüfstandsmessung mit Lagegeber und Lastmaschine. Bei der Prüfstandsmessung kann beispielsweise die Lastmaschine die zu modellierenden Maschine drehen, während ein Umrichter in die zu modellierende

EP 4 009 513 B1

Maschine einen bestimmten SFC $i_1^s$ einprägt und ein Anisotropie-Identifikationsverfahren fortwährend die aktuelle Anisotropie $\tilde{y}_\Delta^s$ berechnet/misst. Dabei wird der Verlauf der gemessenen Anisotropie $\tilde{y}_\Delta^s$ gemeinsam mit der gemessenen Rotorlage $\theta$ aufgezeichnet und als für den SFC $i_1^s$ gültiger Anisotropie-Lage-Zusammenhang abgespeichert. Dieser Ablauf wird für eine Vielzahl weiterer SFCs $i_2^s, i_3^s \ldots i_n^s$ wiederholt, bis der zum Betrieb erforderliche Bereich der Stromebene im statorfesten Koordinatensystem mit ausreichender Auflösung erfasst ist.

In manchen Ausführungsformen wird zur Berechnung der Rotorlage ausschließlich die gemessene Induktivität bzw. Admittanz und der gemessen Stromvektor in Statorkoordinaten und die hinterlegten Lagezuordnungsparameter herangezogen und die geschätzte Rotorlage weder direkt noch indirekt zur Rotorlage-Zuordnung rückgeführt.

Dazu wird zur geberlosen Regelung das Modell $f_s(\cdot)$ einer Maschine so invertiert, dass im Betrieb mit Injektion den Messgrößen $\tilde{y}_\Delta^s$ und $i_s^s$ ein Rotorlage-Wert $\theta$ zugeordnet wird

$$\hat{\theta} = f_s'(\tilde{y}_\Delta^s, i_s^s). \tag{10}$$

Fig. 5 zeigt eine Ausführungsform in der sich durch (10) eine geradlinige Signalführung ergibt, die im Unterschied zu Fig. 2 nur gemessene Größen als Eingangssignale hat und auf eine Rückführung der geschätzten Rotorlage verzichtet.

In manchen Ausführungsformen sind mehrere Verläufe der Induktivität bzw. Admittanz über der Rotordrehung für jeweils verschiedene statorfeste Stromwerte (Schar von Verläufen) in einem Modell hinterlegt oder fließen in ein Modell ein, woraus im Betrieb gemäß der Strommessung ein aktuell gültiger Verlauf oder Parametersatz ausgewählt oder berechnet wird, mittels welchem dann der aktuell gemessenen Induktivität bzw. Admittanz ein Rotorlagewert zugeordnet wird.

Ein solches Ausführungsbeispiel der Rotorlagezuordnung (10) im Betrieb ist in Fig. 6 beispielhaft dargestellt: Zunächst wird durch den aktuell gemessenen Strom $i_1^s$ eindeutig zugeordnet, welche SFC Trajektorie des hinterlegten Modells momentan gültig ist (alle anderen Trajektorien sind nicht mehr dargestellt). Jeder Punkt auf dieser aktuell gültigen SFC Trajektorie entspricht jeweils einem Rotorlagewert, was in Fig. 6 beispielhaft mit 10° Raster eingetragen ist. Der aktuelle gemessene Wert $\tilde{y}_\Delta^s$ (Ergebnis der Anisotropie-Identifikation) wird aufgrund von Messfehlern (Rauschen etc.) neben der SFC Trajektorie liegen und wird folglich einem Punkt der SFC Trajektorie zugeordnet. Durch die gepunkteten Linien in Fig. 6 ist beispielhaft eine Zuordnung zum naheliegendsten Punkt angedeutet. Der zugehörige Winkelwert des zugeordneten Punktes wird schließlich als Lageschätzwert $\theta$ verwendet.

Die in der Antriebstechnik üblichen Prozessoren bieten jedoch nur beschränkte Ressourcen hinsichtlich Rechenleistung und Speicherplatz, von denen die geberlosen Verfahren zudem nur einen kleinen Teil beanspruchen sollten, damit die sonstigen Prozesse nicht übermäßig beeinträchtigt werden. Vor diesem Hintergrund ist ein vollständiges, 3-dimensionales Maschinenmodell $f_s(\cdot)$ (über alle Kombinationen aus $\alpha$- und $\beta$-Strom und Rotorlage im erforderlichen Detailgrad/Auflösung) aus Speichergründen und die oben erwähnte Suche des naheliegendsten Punktes aus Rechenzeitgründen nicht immer realisierbar. Ein Ziel der vorliegenden Beschreibung ist daher ein stark vereinfachtes/reduziertes Modell bzw. Zuordnungsvorschrift bereitzustellen, ohne die Schätzqualität oder Stabilität signifikant zu beeinträchtigen.

In manchen Ausführungsformen sind beispielsweise vier Schritte zur Reduktion des Ressourcenbedarfs möglich, die in den folgenden vier Abschnitten gesondert beschrieben werden. Der erste Schritt betrifft den Speicher- und Rechenbedarf, die übrigen drei Schritte nur den Speicherbedarf. In Summe kann hiermit ein Speicher- und Rechenbedarf erreicht werden, der vergleichbar zur herkömmlichen Rotorlagezuordnung ist.

In manchen Ausführungsformen wird zur Zuordnung der gemessenen Induktivität bzw. Admittanz zur Rotorlage eine lineare Vorschrift verwendet, die einer Projektion des Messwertes auf die im Sollstromarbeitspunkt linearisierte tatsächliche Rotorlageabhängigkeit der Induktivität bzw. Admittanz entspricht.

In manchen Ausführungsformen entspricht dies beispielsweise einer Projektion des Messwertes auf die Tangente der Rotorlageabhängigkeit der Induktivität bzw. Admittanz im Sollstrom-arbeitspunkt.

Eine vollständige SFC Trajektorie $y_\Delta^s(\theta)$ ist im Unterschied zu RFC Trajektorien deutlich größer, komplexer geformt und widerholt sich erst nach einer vollen elektrischen Umdrehung (RFC nach einer halben). Ihre vollständige Beschreibung wäre nur durch viele Harmonische oder viele Stützstellen möglich. Zudem wäre, wie zuvor beschrieben, die Suche des nächstliegenden Punktes in einem Parameterintensiven Modell sehr rechenintensiv.

Dem gegenüber steht, dass im Betrieb bei kleinen Drehzahlen (wo die Anisotropie ausgewertet werden muss) der Strom sich nur auf oder im Bereich nahe um die Sollstromtrajektorie (z.B. MTPA oder q-Achse) befinden wird und dass die Modellierung deutlich abweichender Stromwinkel nahezu ungenutzt sein wird.

Es wird deshalb zur Daten- und Rechenzeit-Reduktion beispielsweise eine jede komplexe SFC Trajektorie im Soll Arbeitspunkt linearisiert und damit als Gerade interpretiert, auf der sich $y_\Delta^s$ bei fortschreitender Rotordrehung linear weiterbewegt

$$y_{\Delta L}^s(\theta) \approx \begin{bmatrix} m_\alpha \\ m_\beta \end{bmatrix} \theta + \begin{bmatrix} Y_{0\alpha} \\ Y_{0\beta} \end{bmatrix}. \tag{11}$$

$$= m_\Delta^s(i_s^s)\,\theta + y_{\Delta 0}^s(i_s^s). \tag{12}$$

Im Soll-Arbeitspunkt beschreibt (12) das magnetische Verhalten exakt und auch wie sich das magnetische Verhalten sich beim Verlassen des Soll-Arbeitspunktes ändert. Mit zunehmendem Abstand vom Soll-Arbeitspunkt kann (12) dann jedoch ungenau und irgendwann falsch werden, was jedoch keinen unmittelbaren Einfluss auf die Schätzgenauigkeit oder -stabilität hat.

Beispielsweise lässt sich mit dieser linearen Approximation der SFC Trajektorie (9) nun eine sehr einfach Rotorlage-Zuordnungsvorschrift aufstellen: Der Lagewert $\theta$ des naheliegendsten Punktes ergibt sich beispielsweise mittels Vektorprojektion des Messwerts $\tilde{y}_\Delta^s$ auf die Gerade $y_{\Delta L}^s$

$$\hat{\theta} = \frac{m_\Delta^{s\,T}(\tilde{y}_\Delta^s - y_{\Delta 0}^s)}{m_\Delta^{s\,T} m_\Delta^s}. \tag{13}$$

Dabei entspricht die Multiplikation eines transponierten ($x^T$) Spaltenvektors mit einem nicht transponierten praktisch einem Skalarprodukt.

Weil in (13) der Messwert $\tilde{y}_\Delta^s = \begin{bmatrix} \tilde{Y}_{\Delta\alpha} & \tilde{Y}_{\Delta\beta} \end{bmatrix}^T$ die einzige Variable ist, braucht ein Großteil der Multiplikationen nicht online gerechnet werden

$$\hat{\theta} = \frac{m_\Delta^{s\,T}}{m_\Delta^{s\,T} m_\Delta^s}\,\tilde{y}_\Delta^s - \frac{m_\Delta^{s\,T} y_{\Delta 0}^s}{m_\Delta^{s\,T} m_\Delta^s} \tag{14}$$

$$= \frac{m_\alpha}{m_\alpha^2 + m_\beta^2}\,\tilde{Y}_{\Delta\alpha} + \frac{m_\beta}{m_\alpha^2 + m_\beta^2}\,\tilde{Y}_{\Delta\beta} - \frac{m_\alpha Y_{0\alpha} + m_\beta Y_{0\beta}}{m_\alpha^2 + m_\beta^2}. \tag{15}$$

$$= k_\alpha \tilde{Y}_{\Delta\alpha} + k_\beta \tilde{Y}_{\Delta\beta} + k_0. \tag{16}$$

Es ist also ausreichend, zur Rotorlagezuordnung für einen SFC lediglich 3 Koeffizienten $k_\alpha$, $k_\beta$ und $k_0$ abzu-speichern und online mit dem Messwert $\tilde{y}_\Delta^s$ zu verrechnen.

In manchen Ausführungsformen werden die Lagezuordnungsparameter in Abhängigkeit vom Strombetrag und vom Stromwinkel hinterlegt $k_\times(i_\parallel, \theta_i)$.

In manchen Ausführungsformen werden die zwei anisotropen Werte der Induktivität bzw. Admittanz vor jeder weiteren Verwendung vom statorfesten Koordinatensystem in ein Koordinatensystem transformiert, das mit dem zweifachen Stromwinkel ausgerichtet ist.

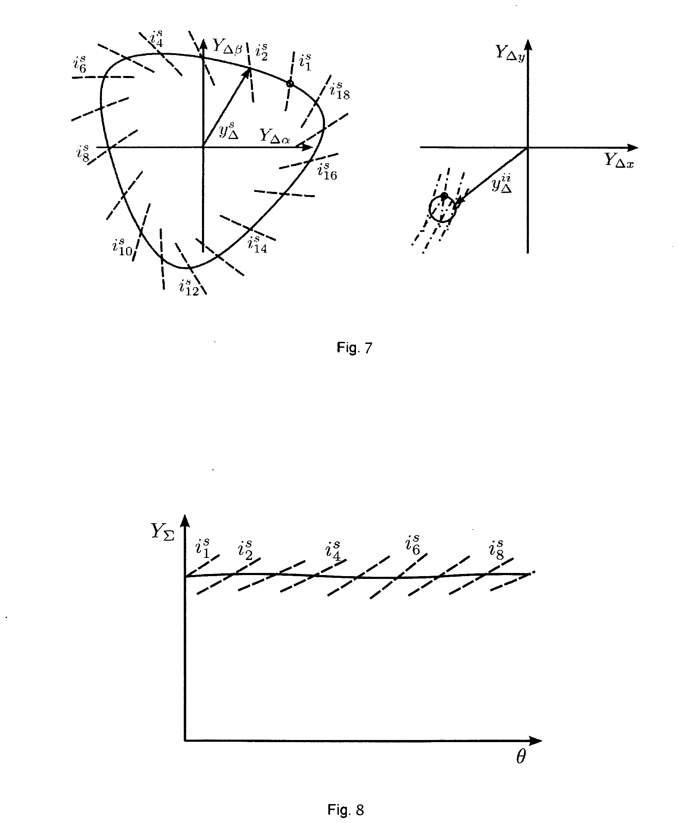

Bei Maschinen mit leichten bis mittleren Anisotropie-Harmonischen weisen die SFC Trajektorien für verschiedene Stromrichtungen eine Rotation mit doppelter elektrischer Frequenz auf. So sind beispielhaft im linken Teil von Fig. 7 die SFC Trajektorien (im Soll-Arbeitspunkt) für Stromvektoren gleichen Betrages mit 10°-Stromwinkelraster aufgetragen, welche sich folglich nach 180° wiederholen.

Dieser Sachverhalt kann zur Datenreduktion genutzt werden, beispielsweise indem der Anisotropie-Vektor $\tilde{y}_\Delta^s$ in ein zweifach rotierendes Koordinatensystem transformiert wird, in dem er deutlich weniger Variation über der Rotordrehung aufweisen wird. Hierbei wird zur Transformation nicht die Rotorlage, sondern ein eindeutig bekannter/messbarer Winkel herangezogen.

Weil die Modellierung $f_s(\cdot)$ ohnehin abhängig vom Stromvektor $i_s^s$ erfolgt und dieser im Soll-Arbeitspunkt in fester Relation zum Rotor steht, ist als Basis für die Transformation beispielsweise der zweifache Stromwinkel bzw.

Doppel-Stromwinkel geeignet

$$\theta_i \qquad\qquad = atan2\big(i_\beta, i_\alpha\big) \qquad\qquad (17)$$

$$y_\Delta^{ii} = \begin{bmatrix} Y_{\Delta x} \\ Y_{\Delta y} \end{bmatrix} = \begin{bmatrix} \cos(2\theta_i) & \sin(2\theta_i) \\ -\sin(2\theta_i) & \cos(2\theta_i) \end{bmatrix} y_\Delta^{s}. \qquad (18)$$

Werden der Anisotropie-Vektor und die SFC Trajektorien gemäß Ausführungsbeispiel in diesen Doppel-Strom-Koordinaten dargestellt, ergeben sich die in Fig. 7 rechts dargestellten Verläufe. Diese sind untereinander nun relativ ähnlich (trotz der mittelstarken harmonischen Anteile der linken Kurve) und können damit auch mit weniger Daten modelliert werden. Mit dieser Transformation ist - abhängig von den Genauigkeitsanforderungen - eine Lagezuordnung sogar für alle Stromrichtungen mit nur einem Satz Koeffizienten $k_x$, $k_y$ und $k_0$ möglich.

Das Vorgehen zur Berechnung dieser transformierten Konstanten ist dann beispielsweise analog zu den statorfesten. Beispielsweise wird zuerst die SFC Trajektorie in Doppel-Strom-Koordinaten linearisiert, was die Steigung $m_\Delta^{ii}$ und den Offset $y_{\Delta 0}^{ii}$ und damit die folgenden Konstanten zur Lagezuordnung ergibt

$$k_x = \frac{m_x}{m_x^2 + m_y^2} \qquad\qquad (19)$$

$$k_y = \frac{m_y}{m_x^2 + m_y^2} \qquad\qquad (20)$$

$$k_0 = -\frac{m_x Y_{0x} + m_y Y_{0y}}{m_x^2 + m_y^2} - \theta_i \qquad\qquad (21)$$

$$\hat{\theta} = k_x \tilde{Y}_{\Delta x} + k_y \tilde{Y}_{\Delta y} + k_0 + \theta_i \ . \qquad\qquad (22)$$

In manchen Ausführungsformen werden nur Lagezuordnungsparameter für einen Sektor des stator-festen Stromkoordinatensystems hinterlegt und die Lagezuordnung in den übrigen Sektoren erfolgt durch Wiederholung des einen Sektors.

Wird beispielsweise angenommen, dass das magnetische Verhalten der Maschine phasensymmetrisch ist, was mit Ausnahme der Stator-festen Anisotropie-Harmonischen auf nahezu alle Drehfehlmaschinen sehr gut zutrifft, kann die zu speichernde Datenmenge weiterhin um Faktor 6 reduziert werden.

Sämtliche Beispiel-Abbildungen dieser Beschreibung waren phasensymmetrisch, was u.a. in Fig. 7 dazu führt, dass die SFC Trajektorien im rechten Teil nach einer sechstel elektrischen Umdrehung wieder aufeinander liegen und damit dort nur 6 SFC Trajektorien erkennbar sind. Es braucht folglich nur eine sechstel elektrische Umdrehung hinterlegt werden, wonach sich der Verlauf dann wiederholt.

Die Berechnung und Hinterlegung sämtlicher Koeffizienten $k_x$, $k_y$ und $k_0$ erfolgt beispielsweise in Abhängigkeit von Strombetrag $i_{||} = |i_s^s|$ und Stromwinkel $\theta_i$, jedoch nur für den Stromwinkelbereich $\theta_i = [0, \pi / 3)$. Im Betrieb werden diese beschnittenen Daten beispielsweise dann mittels der Modulo-Funktion auf den gesamten Stromwinkelbereich $\theta_i = [-\pi, \pi)$ abgebildet

$$\theta_{i\%} = mod\left(\theta_i, \frac{\pi}{3}\right) \qquad\qquad (23)$$

$$\hat{\theta} = k_x\big(i_{||}, \theta_{i\%}\big)\, \tilde{Y}_{\Delta x} + k_y\big(i_{||}, \theta_{i\%}\big)\, \tilde{Y}_{\Delta y} + k_0\big(i_{||}, \theta_{i\%}\big) + \theta_i. \qquad (24)$$

Diese Hinterlegung und Auswertung (23)-(24) ist (trotz 1/6 Daten) vollständig korrekt, wenn das magnetische Verhalten phasensymmetrisch ist. Wie zuvor erwähnt, zeigen manche Maschinen genau eine relevante asymmetrische Komponente: die nullte harmonische- bzw. Stator-feste Anisotropie. Sie repräsentiert den Mittelwert des Anisotropie-vektors $y_\Delta^{s}$ über der Rotorlage für einen bestimmten RFC

$$y_{h0}^s(i_s^r) = \frac{1}{2\pi} \int_{\theta=0}^{2\pi} y_\Delta^s(\theta, i_s^r) d\theta \Bigg|_{i_s^r = const.} \qquad (25)$$

d.h. den Schwerpunkt der RFC Anisotropie-Trajektorie. In den bisherigen Abbildungen war dieser immer Null, was aber in der Praxis mitunter anders ist. Die Folge ist dann eine zweiperiodische Schwingung im Schätzfehler $e_\theta = \hat{\theta} - \theta$, wenn $y_{h0}^s$ nicht entsprechend kompensiert wird.

Eine Kompensation der Stator-festen Anisotropie ist aber beispielsweise auch als Erweiterung zur Phasensymmetrie- Annahme möglich. So wird in manchen Ausführungsformen nach der Messung der zwei anisotropen Werte der Induktivität bzw. Admittanz in statorfesten Koordinaten ein hinterlegter vektorieller Verschiebungswert subtrahiert. Dazu wird $y_{h0}^s$ zuerst gemäß (25) ermittelt und anschließend sowohl zur Modellierung (19)-(21), als auch im Betrieb (24) jeweils vor der Transformation nach Doppel-Strom-Koordinaten subtrahiert

$$y_\Delta^{ii} = \begin{bmatrix} cos(2\theta_i) & sin(2\theta_i) \\ -sin(2\theta_i) & cos(2\theta_i) \end{bmatrix} (y_\Delta^s - y_{h0}^s). \qquad (26)$$

Diese Kompensation kann entweder konstant oder abhängig vom Strombetrag durchgeführt werden, wobei ersteres in der Regel genügt, wenn $y_{h0}^s$ im unbelasteten Fall bestimmt wurde.

Üblicherweise sind sowohl das Rotordesign als auch die Sollstromtrajektorien (MTPA etc.) um die d-Achse spiegelsymmetrisch. Daher wird beispielsweise ein (auf bestimmte Weise) Last-symmetrisches magnetisches Verhalten angenommen. Dies ermöglicht eine zusätzliche Datenreduktion um Faktor 2. Diese optionale Maßnahme führt bei manchen Ausführungsformen mit geringen parasitären Effekten nicht zu einem signifikanten Schätzfehler, sodass sie zwecks Datenreduktion um Faktor 2 vorgesehen werden kann.

In diesem beispielhaften Ansatz werden beispielsweise die Koeffizienten $k_x$, $k_y$ und $k_0$ nur für positive Lasten bestimmt und im Betrieb für positive Lasten gemäß (24) zur Lageschätzung genutzt. Unter der Annahme der Lastsymmetrie kann dann für negative Lasten das folgende Gesetz zur Lageschätzung verwendet werden

$$\theta_{i\%} = mod\left(-\theta_i, \frac{\pi}{3}\right) \qquad (27)$$

$$\hat{\theta} = -k_x(i_\|, \theta_{i\%})\,\tilde{Y}_{\Delta x} + k_y(i_\|, \theta_{i\%})\,\tilde{Y}_{\Delta y} - k_0(i_\|, \theta_{i\%}) + \theta_i. \qquad (28)$$

In manchen Ausführungsformen wird also die Lagezuordnungsvorschrift für negative Drehmomente genau in der Weise aus den Parametern für positive Drehmomente abgeleitet, dass die Vorzeichen des ersten anisotropen Koeffizienten, des isotropen Koeffizienten und des Offsetkoeffizienten jeweils negiert werden.

In manchen Ausführungsformen ist die Induktivität bzw. Admittanz durch drei Werte beschrieben, von denen eine ihren isotropen und zwei ihren statorfesten anisotropen Anteil beschreiben.

Wie zuvor bereits erwähnt, zeigt der isotrope Anteil $Y_\Sigma$ unter herkömmlicher Betrachtung mit Rotor-festem Strom (RFC) nur kaum Lageabhängigkeit. Fig. 8 zeigt in durchgängiger Linie beispielhaft einen RFC-Verlauf von $Y_\Sigma$ mit seinem Offset und der typisch schwachen Variation über der Rotorlage, die nicht zur Lageschätzung genutzt werden kann.

Darüber hinaus sind mit gestichelten Linien neun beispielhafte Verläufe von $Y_\Sigma$ für verschieden Statorfest eingeprägte Ströme (SFC) dargestellt. Analog zu Fig. 7 sind die Ströme jeweils um 10° zueinander verdreht und ergeben damit die zueinander verschobenen Verläufe. Bei Nullstrom sind auch für den isotropen Anteil die RFC- und die SFC-Verläufe identisch. Mit zunehmendem Strombetrag jedoch wird die Steigung der SFC-Verläufe, d.h. ihre Lageabhängigkeit immer stärker und liefert bei sehr hohen Strömen sogar den größten Informationsanteil aller Signale. Zudem sind die SFC-Verläufe von $Y_\Sigma$ um den Sollarbeitspunkt noch sicherer (d.h. für noch mehr Maschinen über einen noch breiteren Betriebsbereich) monoton, als es die SFC Trajektorien $y_\Delta^{ii}$ sind, wodurch die Stabilität und die Anwendbarkeit hier beschriebener Ausgestaltungen nochmals erhöht werden können.

Der isotrope Anteil $Y_\Sigma$ wird beispielsweise zusätzlich zu $y_\Delta^{ii}$ als dritte Dimension der Lageinformation mit aufgenommen und im Soll-Arbeitspunkt linearisiert

$$y_{\Delta\Sigma}^{ii} = \begin{bmatrix} Y_{\Delta x} \\ Y_{\Delta y} \\ Y_{\Sigma} \end{bmatrix} \tag{29}$$

$$\approx \begin{bmatrix} m_x \\ m_y \\ m_{\Sigma} \end{bmatrix} \theta + \begin{bmatrix} Y_{0x} \\ Y_{0y} \\ Y_{0\Sigma} \end{bmatrix} \tag{30}$$

$$= m_{\Delta\Sigma}^{ii} \theta + Y_{0\Delta\Sigma}^{ii}. \tag{31}$$

Mit dieser dritten Dimension ergeben sich in diesem Ausführungsbeispiel die Koeffizienten und die Gleichung zur Lageschätzung zu

$$k_x = \frac{m_x}{m_x^2 + m_y^2 + m_{\Sigma}^2} \tag{32}$$

$$k_y = \frac{m_y}{m_x^2 + m_y^2 + m_{\Sigma}^2} \tag{33}$$

$$k_{\Sigma} = \frac{m_{\Sigma}}{m_x^2 + m_y^2 + m_{\Sigma}^2} \tag{34}$$

$$k_0 = -\frac{m_x Y_{0x} + m_y Y_{0y} + m_{\Sigma} Y_{0\Sigma}}{m_x^2 + m_y^2 + m_{\Sigma}^2} - \theta_i \tag{35}$$

$$\hat{\theta} = k_x \tilde{Y}_{\Delta x} + k_y \tilde{Y}_{\Delta y} + k_{\Sigma} \tilde{Y}_{\Sigma} + k_0 + \theta_i. \tag{36}$$

Unter der Annahme der Lastsymmetrie gilt beispielsweise die folgende Gleichung zur Lageschätzung bei negativen Lasten

$$\hat{\theta} = -k_x \tilde{Y}_{\Delta x} + k_y \tilde{Y}_{\Delta y} - k_y \tilde{Y}_{\Sigma} - k_0 + \theta_i. \tag{37}$$

Die Annahme der Phasensymmetrie kann auf $Y_{\Sigma}$ und damit $y_{\Delta\Sigma}^{ii}$ in gleicher Weise angewendet werden, wie zuvor auf $y_{\Delta}^{ii}$. Die Transformation in Doppel-Strom-Koordinaten wird jedoch wie zuvor nur auf die ersten zwei Komponenten in $y_{\Delta\Sigma}^{ii}$ angewendet - $k_{\Sigma}$ bleibt davon unberührt.

Durch die Einführung des isotropen Anteils $Y_{\Sigma}$ wird zwar die Lageinformation, die Stabilität und die Anwendbarkeit deutlich verbessert, aber auch die Temperaturabhängigkeit der Lagezuordnung erhöht. Namentlich zeigt die Temperatur der Permanentmagnete (PMs) (im/am Rotor) Einfluss auf die Schätzergebnisse. Wenn diese steigt, dann fällt der PM-Fluss (reversibel, um bis zu 15%) und reduziert den Sättigungsgrad des Eisens. Damit fällt vor allem der isotrope Anteil $Y_{\Sigma}$, aber auch der Betrag der Anisotropie $|y_{\Delta}^s|$. Die Orientierung der Anisotropie $\angle y_{\Delta}^s$ wird nur kaum beeinflusst, weshalb herkömmliche Verfahren zur Rotorlagezuordnung nur eine geringere Temperaturabhängigkeit aufweisen. Die Verfahren [23], [24] und [25] gemäß Stand der Technik hingegen sind vergleichbar temperatursensitiv wie das hier beschriebene Ausführungsbeispiel, sie beziehen im Grundansatz wenige Dimensionen der Admittanz ein und betreffen Verfahren ohne Temperaturnachführung. Obige Beschreibung trifft vor allem auf Maschinen mit Oberflächen-montierten PMs zu, weil deren Anisotropie hauptsächlich durch Sättigung hervorgerufen ist. Maschinen mit vergrabenen PMs zeigen eine geringere und Reluktanzmaschinen (ohne PMs) keine relevante Temperaturabhängigkeit.

Im Folgenden werden zwei beispielhafte Ansätze zur Temperaturkompensation beschrieben, von denen der erste ohne zusätzliche Messdaten auskommt und der zweite Messdaten von einer Maschine mit verschiedenen Temperaturen erfordert. Alle beispielhaften Ansätze erfordern jedoch eine multidimensionale Admittanz-Information, die nur aus linear unabhängige Spannungsvektoren im Injektionsmuster gewonnen werden kann. Das heißt, dass insbesondere die sog. Alternierende Injektion als Basis unzureichend ist.

Am stärksten beeinflusst die Temperatur den isotropen Anteil $Y_\Sigma$, welcher durch die Zusammenhänge die Vektorprojektion (32)-(34) bei hohen Lasten oft den größten Einfluss auf die Lagezuordnung hat. Namentlich verändert die Temperatur vor allem seinen Offsetwert bei Nulllast $Y_{\Sigma i0} = Y_\Sigma(|i_s^s| = 0)$, während von da ausgehend der relative Verlauf nahezu gleich ist. So ist Fig. 8 beispielhaft und qualitativ dargestellt, wie die Verläufe von $Y_\Sigma$ über dem Strombetrag auf der Sollstromtrajektorie für eine kalte (durchgezogene Kurve) und eine heiße Maschine (gestrichelte Kurve) lediglich zueinander verschoben sind. Eine kalte Maschine hat beispielsweise etwa Raumtemperatur und eine heiße Maschine beispielsweise etwa die Temperatur, die sich bei dauerhaftem Betrieb mit Nennlast ergibt.

Die gepunkteten Kurven zeigen die Veränderung von $Y_\Sigma$ wenn man bei gleichbleibendem SFC den Rotor links oder rechts verdreht - d.h. die Lageinformation, die gleichzeitig erklärt, warum bei heißer Maschine und Schätzung mit kalten Parametern ein Schätzfehler entsteht.

Deshalb wird in manchen Ausführungsformen der isotrope Anteil der Admittanz bzw. Induktivität ausschließlich bei großem Strombetrag zur Lageschätzung herangezogen und bei kleinem Strombetrag zur Korrektur einer Variable, die den für Nullstrom gelten Wert des isotropen Anteils enthält.

Bei kleinen Strombeträgen $|i_s^s|$ ist die Lageinformation in $Y_\Sigma$ nur schwach, wodurch die Lageschätzung hauptsächlich auf $y_\Delta^s$ beruht. Deshalb werden in manchen Ausführungsformen temperaturbedinge Änderungen der magnetischen Eigenschaften der Synchronmaschine in der Lagezuordnung auch ohne Messdaten zur Temperaturabhängigkeit dadurch kompensiert, dass in die Lagezuordnung nicht der gemessene isotrope Anteil selbst eingeht, sondern die Differenz zwischen diesem Messwert und dem nachgeführten für Nullstrom gelten Wert des isotropen Anteils.

Zur parameterfreien Temperaturkompensation wird dazu beispielsweise in diesem Strombereich $|i_s^s| < i_{thr}$ der Einfluss des isotropen Anteils $Y_\Sigma$ auf die Lageschätzung künstlich abgeschaltet $k_\Sigma = 0$ (Schätzung nur mit $y_\Delta^{s'}$) und dann wird beispielsweise die Messung von $Y_\Sigma$, also $\breve{Y}_\Sigma$ dazu zu verwendet, um den Offsetwert $Y_{\Sigma i0}$ nachzuführen.

$Y_{\Sigma i0}$ ist folglich eine Variable, die oberhalb $|i_s^s| > i_{thr}$ in der Lageschätzung (35) und (36) beispielsweise wie folgt zu berücksichtigen ist

$$k_0 = -\frac{m_x Y_{0x} + m_y Y_{0y} + m_\Sigma(Y_{0\Sigma} - Y_{\Sigma i0})}{m_x^2 + m_y^2 + m_\Sigma^2} - \theta_i \qquad (38)$$

$$\hat{\theta} = k_x \breve{Y}_{\Delta x} + k_y \breve{Y}_{\Delta y} + k_\Sigma(\breve{Y}_\Sigma - Y_{\Sigma i0}) + k_0 + \theta_i. \qquad (39)$$

**Unterhalb** $|i_s^s| < i_{thr}$ wird $Y_{\Sigma i0}$ mit einem beispielhaften Filtergesetz allmählich nachgeführt

$$\frac{dY_{\Sigma i0}}{dt} = \omega_\Sigma(\breve{Y}_\Sigma - Y_{\Sigma i0}), \qquad (40)$$

worin $\omega_\Sigma$ die Filter-Eckfrequenz ist. In dieser einfachsten Form der Nachführung (40) ist ein Ansteigen der Kurven innerhalb $|i_s^s| < i_{thr}$ nicht berücksichtig, was bei erhöhten Schwellwerten $i_{thr}$ zu Fehlern in der Nachführung von $Y_{\Sigma i0}$ und damit in der Schätzung von $\hat{\theta}$ führen kann. Diese Fehler können beispielsweise vermieden werden, wenn das Ansteigen von $Y_\Sigma$ mittels eines (offsetfreien) Polynoms n-ter Ordnung in der Nachführgleichung (40) berücksichtigt wird

$$\frac{dY_{\Sigma i0}}{dt} = \omega_\Sigma\left(\breve{Y}_\Sigma - Y_{\Sigma i0} - \sum_{j=1}^{n} a_j |i_s^s|^j\right) \qquad (41)$$

worin die Koeffizienten $a_j$ die jeweilige Potenz gewichten. Üblicherweise beschreibt innerhalb $|i_s^s| < i_{thr}$ allein die zweite

Potenz den Verlauf bereits sehr gut, weshalb das wie folgt reduzierte und damit noch relativ rechensparsame Nachführgesetz in der Regel genügt

$$\frac{dY_{\Sigma i0}}{dt} = \omega_{\Sigma}\left(\tilde{Y}_{\Sigma} - Y_{\Sigma i0} - a_2|i_s^s|^2\right). \tag{42}$$

Bei Maschinen mit komplexem Anisotropie-Verhalten, die Anisotropie-Trajektorien wie in Fig. 1 rechts aufweisen, kann über $Y_{\Sigma}$ hinaus auch die Temperaturabhängigkeit der SFC Trajektorien von $y_{\Delta}^{ii}$ so stark ausfallen, dass eine parameterfreie Kompensation nicht genügt und zu große Schätzfehler bis hin zu Instabilitäten auftreten.

Deshalb werden in manchen Ausführungsformen verschiedene Lagezuordnungsparameter, die für verschiedene Maschinentemperaturen gelten, aus mehreren, bei verschiedenen Maschinentemperaturen gewonnenen Messdaten abgeleitet. Diese Ausführungsformen werden beispielsweise für Maschinentypen mit komplexem Anisotropie-Verhalten verwendet.

So kann in einem Ausführungsbeispiel zusätzlich die Lageabhängigkeit bei hoher Maschinentemperatur ermittelt und entsprechende Koeffizientenfelder $k_{xh}$, $k_{yh}$, $k_{\Sigma h}$ und $k_{0h}$ über Strombetrag $i_{\parallel}$ und -winkel $\theta_i$ abgelegt werden. Weil die Lagezuordnungsvorschrift (37) oder (39) vollständig linear ist, können die kalten ($k_{\times c}$) und die heißen Koeffizienten ($k_{\times h}$) einfach linear interpoliert werden

$$k_{\times} = k_{\times c} + v_h(k_{\times h} - k_{\times c}), \tag{43}$$

wodurch sich dann bei kalter Maschine ($v_h = 0$), bei heißer Maschine ($v_h = 1$) und auch im Zwischenbereich ($0 < v_h < 1$) eine korrekte Lagezuordnung ergibt.

Dabei gibt es beispielsweise zwei Informationsquellen um den Gewichtungsfaktor $v_h$ mit sich verändernder Temperatur online nachzuführen, die in den folgenden zwei Unterabschnitten beschrieben werden und entweder separat oder in Kombination verwendet werden können.

In manchen Ausführungsformen werden temperaturbedinge Änderungen der magnetischen Eigenschaften der Synchronmaschine in der Lagezuordnung dadurch kompensiert, dass der nachgeführte für Nullstrom geltende Wert des isotropen Anteils genutzt wird, um die Gewichtung zwischen Lagezuordnungsparametern anzupassen, die für verschiedene Maschinentemperaturen gelten.

Teil der kalten und der heißen Daten sind die jeweiligen Nullstrom-Offsetwerte des isotropen Anteils $Y_{\Sigma i0c}$ (kalt) und $Y_{\Sigma i0c}$ (heiß), die sich aufgrund des reversiblen Absinkens des PM-Flusses deutlich unterscheiden sollten. Mit diesen Randparametern und einem der Nachführgesetze (40) bis (42) zur Messung von $Y_{\Sigma i}$ kann bestimmt werden, zu welchem Verhältnis der aktuelle Betriebszustand welchen Daten zugeordnet werden kann

$$v_h = \frac{Y_{\Sigma i0} - Y_{\Sigma i0c}}{Y_{\Sigma i0h} - Y_{\Sigma i0c}}. \tag{44}$$

Weil $Y_{\Sigma i0}$ ein relativ starkes Signal liefert, ermöglichen diese Ausführungsformen eine relativ genaue Zuordnung des zugehörigen Datensatzes. Die Nachführung von $Y_{\Sigma i}$ und damit die Aktualisierung von $v_h$ funktioniert jedoch nur im unteren Strombereich $|i_s^s| < i_{thr}$. Zudem wird bei Maschinen mit komplexem Verhalten der Schwellwert $i_{thr}$ beispielsweise niedrig gewählt, um $Y_{\Sigma}$ möglichst früh zur Lageschätzung mit heranziehen zu können.

In manchen Ausführungsformen wird die temperaturbedinge Änderungen der magnetischen Eigenschaften der Synchronmaschine in der Lagezuordnung dadurch kompensiert, dass eine zur Richtung der Lageabhängigkeit der Induktivität bzw. Admittanz orthogonale Verschiebung der gemessenen Induktivität bzw. Admittanz genutzt wird, um die Gewichtung zwischen Lagezuordnungsparametern anzupassen, die für verschiedene Maschinentemperaturen gelten.

Die Berechnung des Gewichtungsfaktors $v_h$ mittels orthogonaler Auswertung funktioniert auch oberhalb $|i_s^s| > i_{thr}$ und vervollständigt damit den Nachführbereich auf den gesamten Sollstrombereich. Jedoch liefert dieser beispielhafte Ansatz nur eine geringere Signalstärke als der isotrope Anteil und kann damit tendenziell eher zu Schätzfehlern führen. Er sollte deshalb beispielsweise nur dann verwendet werden, wenn der untere Strombereich $|i_s^s| < i_{thr}$ über längere Zeit nicht durchlaufen wurde.

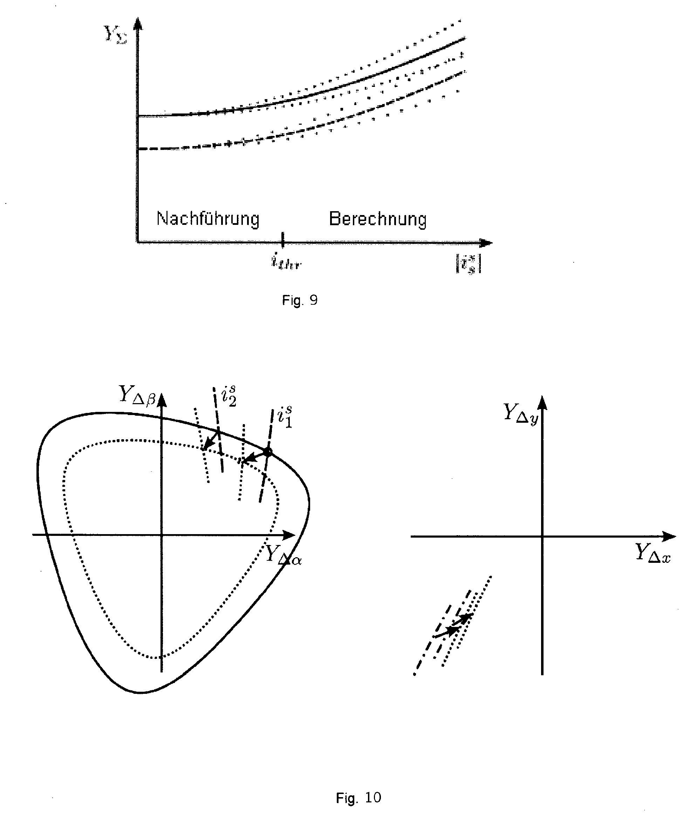

In Fig. 10 links ist mit gepunkteten Linien beispielhaft dargestellt, wie sich die RFC Trajektorie und zwei SFC Trajektorien verschieben, wenn die Maschine nicht kalt, sondern heiß eingemessen wurde.

Die Pfeile zeigen den konkreten Verschiebungsvektor $\Delta y_{\Delta}^s$ im Sollarbeitspunkt, welcher einen zur Rotorlageabhängigkeit (gestrichelte Linien) parallelen und einen orthogonalen Anteil aufweist. Der gleiche Zusammenhang findet sich auch auf der rechten Seite von Fig. 10 nochmals in Doppelstrom-Koordinaten dargestellt, wo die Richtungen der Verschiebungsvektoren $\Delta y_\Delta^{ii}$ erwartungsgemäß zueinander ähnlicher sind.

Der zur Lageabhängigkeit parallele Anteil $y_{\Delta\Sigma\parallel}^{ii}$ ist genau die vektorielle Komponente, die unter Temperaturveränderung zu einem Schätzfehler führt. Er berechnet sich beispielsweise wie folgt durch Projektion

$$\Delta y_{\Delta\Sigma\parallel}^{ii} = \frac{\Delta y_{\Delta\Sigma}^{ii}{}^T m_{\Delta\Sigma}^{ii}}{m_{\Delta\Sigma}^{ii}{}^T m_{\Delta\Sigma}^{ii}} m_{\Delta\Sigma}^{ii}. \tag{45}$$

Der orthogonale Anteil $\Delta y_{\Delta\Sigma\perp}^{ii}$ liegt beispielsweise genau in derjenigen Lageinformations-freien Richtung (bei drei Dimensionen spannen diese möglichen Richtungen eine Ebene auf), in der sich die höchste Temperaturabhängigkeit ergibt. Er berechnet sich z.B., indem aus der tatsächlichen Temperaturabhängigkeit $\Delta y_{\Delta\Sigma}^{ii}$ die enthaltene Lageabhän-gigkeit $\Delta y_{\Delta\Sigma\parallel}^{ii}$ vektoriell subtrahiert wird

$$\Delta y_{\Delta\Sigma\perp}^{ii} = \Delta y_{\Delta\Sigma}^{ii} - \Delta y_{\Delta\Sigma\parallel}^{ii}. \tag{46}$$

Werden nun im Betrieb dauerhaft Admittanzwerte $\tilde{y}_{\Delta\Sigma}^{ii}$ in einer bestimmten Richtung neben der SFC Trajektorie eingemessen, dann kann aus dem orthogonalen Anteil der Abweichung beispielsweise der Temperatur- Gewicht-ungsfaktor $v_h$ abgeleitet werden. Die Berechnung erfolgt mittels Projektion

$$v_h = \frac{\left(\tilde{y}_{\Delta\Sigma}^{ii} - Y_{0\Delta\Sigma}^{ii}\right)^T \Delta y_{\Delta\Sigma\perp}^{ii}}{\Delta y_{\Delta\Sigma\perp}^{ii}{}^T \Delta y_{\Delta\Sigma\perp}^{ii}}. \tag{47}$$

Aufgrund der üblicherweise nur sehr langsamen Temperaturveränderung des Rotors wird (47) beispielsweise zusätzlich mit einem Filter mit Tiefpassverhalten und entsprechend sehr niedriger Bandbreite gefiltert. Beispielsweise wird die Bandbreite zusätzlich mit dem Betragsquadrat der aktuellen Temperaturinformation ($\Delta y_{\Delta\Sigma\perp}^{ii}{}^T \Delta y_{\Delta\Sigma\perp}^{ii}$) skaliert, um in Betriebspunkten mit wenig Temperaturinformation die Nachführung weniger stark zu beeinflussen als in Punkten mit viel Information.

Im Übrigen ist es für alle Ansätze unwichtig, welche Temperatur die Maschine tatsächlich hat. Die Verfahren ermitteln lediglich, dass die Maschine von einem zu einem anderen magnetischen Verhalten übergeht und verwenden eine entsprechend andere Zuordnungsvorschrift zwischen Admittanz/Induktivität (d.h. magnetischem Verhalten) und Rotorlage. Diese sehr direkte Art der Kompensation verzichtet damit vollständig auf Annahmen hinsichtlich des Zusammenhangs zwischen Temperatur und magnetischem Verhalten und zudem auf die Probleme und Hürden einer PM-Temperaturermittlung (PMs drehen sich mit dem Rotor, nur Phasentemperaturmessung mittelmäßig verbreitet, Temperaturmodelle ungenau und störanfällig).

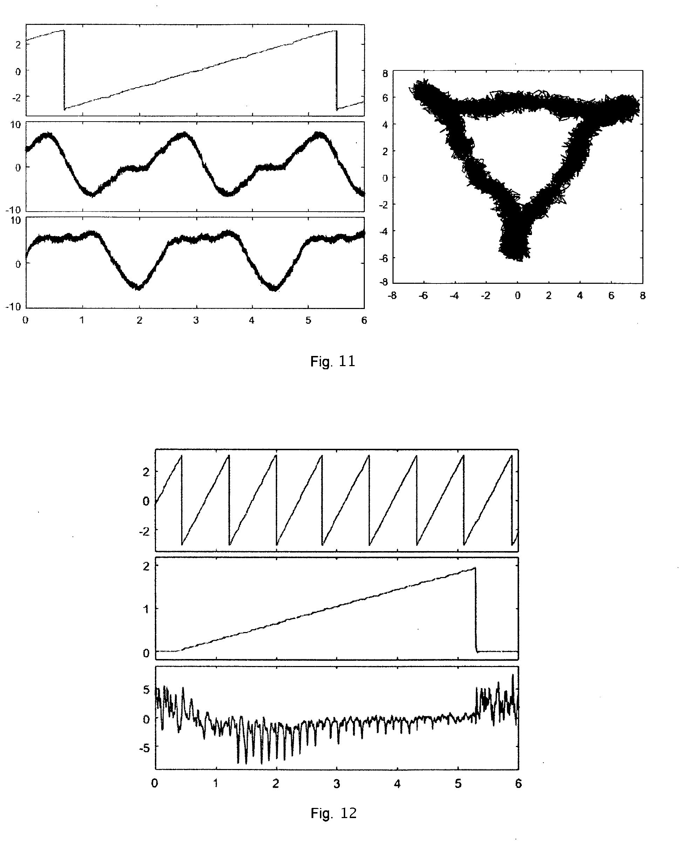

Sämtliche nachfolgende Messergebnisse wurde mit der gleichen, sehr kritischen Maschine gewonnen, die mit herkömmlichen Verfahren nur bis weniger als halbe Nennlast stabil regelbar ist. Fig. 11 zeigt die Ortskurve des Anisotropievektors $\tilde{y}_\Delta^s$ und die Zeitverläufe seiner Komponenten bei halber Nennlast, die in den Eckpunkten stagnieren und in sich zurückkehren. Diese Verläufe sind mit herkömmlichen Verfahren nicht eindeutig zuordenbar und in den Ecken würden sich große Schätzfehler und ein deutlich schwankender Verlauf der Lageschätzung $\hat{\theta}$ ergeben.

Die in Fig. 11 dargestellte Lageschätzung hingegen zeigt ein zum tatsächlichen Verlauf passendes, geradliniges Verhalten von $\hat{\theta}$, sodass der auf dieser Basis geregelte q-Strom konstant das Sollmoment erzeugt.

Oberhalb halber Nennlast werden herkömmliche Verfahren bei dieser Maschine aufgrund der in [22] beschriebenen Gründe instabil. Fig. 12 zeigt hingegen, dass das hier beschriebene Verfahren bei allen Lasten eine stabile Lageschätzung ermöglicht.

Der Schätzfehler bleibt mit Ausnahme kurzer Überschreitungen in einem Band von $\pm 5°$ (elektrische Lage) und wird mit zunehmender Last immer kleiner (genauer).

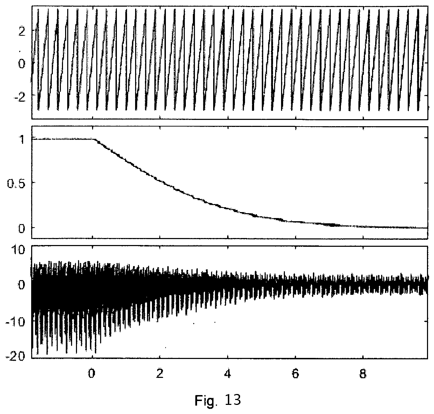

Fig. 13 zeigt den Prozess der Temperaturnachführung, gemäß der oben erwähnten beispielhaften Ausführungsformen, mittels kalter und heißer Lagezuordnungsdaten. Die kalte Maschine wird zu Anfang nur mittels heißer Daten

($v_h$ = 1) geregelt, wobei Schätzfehler von knapp 20° auftreten und die Lagezuordnung kurz vor der Instabilität ist.

Zum Zeitpunkt 0 wird die Temperaturnachführung aktiviert, wodurch das Gewichtungsverhältnis zwischen kalten und heißen Lagezuordnungsdaten innerhalb einiger Sekunden zu $v_h \approx 0$ korrigiert wird.

Infolge dessen sinkt der Schätzfehler bis unter ein Fehlerband von $\pm 2.5°$, was zeigt, dass entgegen des initialen Zustands das tatsächliche magnetische Verhalten der Maschine korrekt erkannt und die Lagezuordnung entsprechend angepasst wurde. Selbst diese kritische Maschine kann damit im gesamten Temperaturbereich stabil und genau ohne Lagegeber geregelt werden.

Weitere Aspekte betreffen:

(i) Eine Vorrichtung zur Steuerung und Regelung einer Drehfeldmaschine, umfassend einen Stator und einen Rotor, mit einem mit einer Einrichtung zur Erfassung einer Anzahl von Phasenströmen und mit einem Controller zur Ansteuerung des PWM-Umrichters, der zur Durchführung des Verfahrens wie oben beschrieben eingerichtet und ausgebildet ist; und einen

(ii) Synchronmaschine, umfassend einen Stator und einen Rotor mit oder ohne Permanentmagnete, mit einer Vorrichtung zur Steuerung und/oder Regelung wie in Punkt (i) beschrieben.

Die heute etablierte, hocheffiziente Ansteuerung von Elektromotoren und -generatoren (beides Maschinen) setzt voraus, dass der Rotorwinkel zu jedem Zeitpunkt bekannt ist, d.h. in der Regel gemessen wird. Ohne diese Kenntnis können nur deutlich ineffizientere Ansteuerverfahren eingesetzt werden. Die Messung erfolgt im Betrieb mittels eines Sensors, der an der Rotorwelle angebracht ist - der sogenannte Rotorlagegeber oder kurz Geber.

Geber bringen eine Reihe von Nachteilen mit sich, wie z.B. erhöhte Systemkosten, verringerte Robustheit, erhöhte Ausfallwahrscheinlichkeit und größerer Bauraumbedarf, die das große industrielle Interesse begründen, das Winkelsignal ohne Verwendung eines Gebers zu gewinnen und für die effiziente Regelung einzusetzen.

Verfahren, die dies ermöglichen, werden als "geberlose" oder "sensorlose" Regelung bezeichnet und teilen sich in 2 Klassen auf:

1. Grundwellenverfahren werten die unter Bewegung induzierte Spannung aus, liefern bei mittleren und hohen Drehzahlen sehr gute Signal-Eigenschaften, aber versagen im unteren Drehzahlbereich, insbesondere bei Stillstand.
2. Anisotropie-basierte Verfahren werten die Lageabhängigkeit der Induktivität der Maschine aus, wozu keine Drehzahl notwendig ist, aber weisen mehrere Probleme und Hürden auf, die erklären, warum viele Anwendungen bis heute einen Lagegeber (mit seinen Nachteilen) benötigen.

Eine der schwersten Problemstellung Anisotropie-basierter Verfahren ist deren Lastgrenze. Bei Überschreitung einer bestimmten Drehmomentschwelle verliert sich für herkömmliche Anisotropie-basierte Verfahren die Eindeutigkeit der Lageinformation, wodurch der Regelkreis instabil wird. Dabei hängt die Höhe der Drehmomentschwelle vom Maschinendesign ab und kann bei modernen Maschinen (mit konzentrierter Wicklung) deutlich unter Nennlast liegen.

Das hier beschriebene Verfahren betrifft einen von zwei Bestandteilen Anisotropie-basierter Verfahren, nämliche die Rotorlage-Zuordnung. Diese wird auf komplexere Weise hergeleitet und umgesetzt, wodurch die Eindeutigkeit unter Last nicht verloren geht und der Regelkreis generell stabil ist und bleibt.

Diese eindeutige Rotorlagezuordnung ist jedoch stärker abhängig von der Rotortemperatur, als es herkömmliche Verfahren sind. Um im gesamten Temperaturbereich eine stabile und hinreichend genaue Regelung zu erreichen, wird das Verfahren gemäß bestimmter Ausführungsbeispiele um eine Temperaturnachführung erweitert. Die Temperaturnachführung setzt voraus, dass eine mindestens 3-dimensionale Admittanz-Information vorliegt, welche nur mittels linear unabhängiger Injektionspulse gemessen werden kann.

**Literaturverzeichnis**

[1] M. Schrödl, "Detection of the rotor position of a permanent magnet synchronous machine at standstill," IEEE Conf. ICEM, p. 51-56, 1988.

[2] P. L. Jansen und R. D. Lorenz, "Transducerless position and velocity estimation in induction and salient ac machines," IEEE Trans. on Industrial Applications, vol. 31, p. 240-247, 1995.

[3] M. J. Corley und R. D. Lorenz, "Rotor position and velocity estimation for a salient-pole permanent magnet synchronous machine at standstill and high speeds," IEEE Trans. on Industrial Applications, vol. 34, p. 784-789, 1998.

[4] D. Paulus, P. Landsmann und R. Kennel, "Sensorless field- oriented control for permanent magnet synchronous machines with an arbitrary injection scheme and direct angle calculation," IEEE Conf. SLED, pp. 41-46, 2011.

[5] P. Landsmann.DE, EP, WO Patent DE102015217986A1, 2015.

[6] D. Paulus, P. Landsmann, S. Kuehl und R. Kennel, "Arbitrary injection for permanent magnet synchronous machines with multiple saliencies," in IEEE Conf. ECCE, Denver, 2013.

[7] T. Frenzke, "Impacts of cross-saturation on sensorless control of surface permanent magnet synchronous motors," in Conf. EPE, Dresden, 2005.

[8] D. Reigosa, P. Garcia, D. Raca, F. Briz und R. D. Lorenz, "Measurement and Adaptive Decoupling of Cross-Saturation Effects and Secondary Saliencies in Sensorless-Controlled IPM Synchronous Machines," in IEEE Industry Applications Annual Meeting, New Orleans, 2007.

[9] S. Paulus und G. Götting, "Self-sensing control of permanent-magnet synchronous machines with reluctance and saturation effects using high-frequency signal injection," in APEC, Long Beach, 2013.

[10] M. Schrödl und R. Ensbacher, "Verfahren und schaltungsanordnungen zur bestimmung maschinenbezogener elektromagnetischer und mechanischer zustandsgrössen an über umrichter gespeisten elektrodydynamischen drehfeldmaschinen". US EP DE Patent WO1992019038A1, 08 04 1992.

[11] P. L. Jansen und R. D. Lorenz, "Method and apparatus for transducerless flux, position and velocity estimation in drives for ac machines". US EP JA KR CA DE Patent WO1995017780A1, 16 12 1994.

[12] M. M. Wogari, K. Ide und M. Sawamura, "Electric motor pole position sensing method, pole position sensing apparatus, and electric motor control apparatus using the same". US JP CN Patent WO2003015256A1, 05 08 2002.

[13] N. Bianchi und S. Bolognani, "Influence of rotor geometry of an interior PM motor on sensorless control feasibility," in IEEE Conf. IAS Annual Meeting, 2005.

[14] P. Guglielmi, M. Pastorelli und A. Vagati, "Cross-Saturation Effects in IPM Motors and Related Impact on Sensorless Control," IEEE Trans. on Industry Applications, pp. 1516-1522, Nov.-Dec 2006.

[15] O. C. Ferreira und R. Kennel, "Encoderless Control of Industrial Servo Drives," in EPE/PEMC, Portoroz, 2006.

[16] P. Balazovic und R. Filka, "Motor controller for determining a position of a rotor of an AC motor, AC motor system, and method of determining a position of a rotor of an AC motor". US Patent US8217605B2, 20 08 2007.

[17] J. Liu, M. M. Harbaugh, T. A. Nondahl, P. B. Schmidt und S. Royak, "Method and apparatus for automatically identifying electrical parameters in a sensor-less PMSM". US Patent US8228013B2, 10 09 2008.

[18] C. Y. Yu, J. Tamura, D. Reigosa und R. D. Lorenz, "Position self-sensing evaluation of a FI-IPMSM based on high frequency signal injection methods," in IEEE Conf. ECCE, Phoenix, 2011.

[19] L. Chen, G. Götting, S. Dietrich und I. Hahn, "Self-Sensing Control of Permanent-Magnet Synchronous Machines With Multiple Saliencies Using Pulse-Voltage-Injection," IEEE Trans. on Industry Applications, pp. 3480-3491, July-Aug. 2016.

[20] T. S. Slininger und R. D. Lorenz, "Enhancing self-sensing estimation accuracy via negative sequence current image registration, with evaluation on a low saliency ratio machine," in IEEE Conf. SLED, Catania, 2017.

[21] B. Meier, M. Oettmeier, J. O. Fiedler und T. Bertram, "Enabling sensorless control of a permanent magnet synchronous machine in the low speed region using saturation," in IEEE Conf. IECON, Florence, 2016.

[22] W. Hammel, P. Landsmann und R. M. Kennel, "Operating point dependent anisotropies and assessment for position-sensorless control," in EPE/ECCE Europe, Karlsruhe, 2016.

[23] A. K. Jebai, F. Malrait, P. Martin und P. Rouchon, "Sensorless position estimation of Permanent-Magnet Synchronous Motors using a nonlinear magnetic saturation model," in IEEE Conf. ICEM, Marseille, 2012.

[24] A. Jebai, F. Malrait, P. Martin und R. Rouchon, "Control method implemented in a power converter and intended for identifying parameters linked to the magnetic saturation of an electric motor". US EP CN FR WO Patent US9197152B2, 29 Feb 2012.

[25] M. Roetzer, U. Vollmer, L. Chen und R. Kennel, "Anisotropy-based position estimation approach for symmetrical dual three-phase permanent magnet synchronous machines," in IEEE Conf. SLED, Catania, 2017.

**Patentansprüche**

1. Verfahren zur Zuordnung der Induktivität oder Admittanz zur Rotorlage einer Synchronmaschine, umfassend einen Stator und einen Rotor mit oder ohne Permanentmagnete, wobei die Synchronmaschine über getaktete Klemmspannungen angesteuert und aus diesen und der gemessenen Stromantwort die Induktivität oder Admittanz berechnet wird, wobei der Verlauf der Induktivität oder Admittanz über der Rotordrehung unter der Randbedingung eines in Statorkoordinaten unveränderten, mindestens zweidimensionalen Stromvektors als Schlüsselinformation zur Lagezuordnung verwendet wird, **dadurch gekennzeichnet, dass** der isotrope Anteil der Admittanz ($Y_\Sigma$) oder Induktivität ausschließlich bei einem Strombetrag grösser als ein Schwellwert zur Lageschätzung herangezogen wird, und bei einem Strombetrag kleiner als der Schwellwert der isotrope Anteil der Admittanz ($Y_\Sigma$) oder Induktivität zur Korrektur einer Variable, die den für den Nullstrom geltenden Wert des isotropen Anteils ($Y_\Sigma$) enthält, herangezogen wird.

2. Verfahren nach Anspruch 1, **dadurch gekennzeichnet, dass** die temperaturbedinge Änderungen der magnetischen Eigenschaften der Synchronmaschine in der Lagezuordnung auch ohne Messdaten zur Temperaturabhängigkeit dadurch kompensiert werden, dass in die Lagezuordnung nicht der gemessene isotrope Anteil ($Y_\Sigma$) selbst eingeht, sondern die Differenz zwischen diesem Messwert und dem nachgeführten für Nullstrom gelten Wert des isotropen Anteils ($Y_\Sigma$).

3. Verfahren nach Anspruch 2, **dadurch gekennzeichnet, dass** die temperaturbedingen Änderungen der magnetischen Eigenschaften der Synchronmaschine in der Lagezuordnung dadurch kompensiert werden, dass der nachgeführte für Nullstrom geltende Wert des isotropen Anteils ($Y_\Sigma$) genutzt wird, um die Gewichtung zwischen Lagezuordnungsparametern anzupassen, die für verschiedene Maschinentemperaturen gelten.

4. Verfahren nach einem der Ansprüche 1 bis 3, **dadurch gekennzeichnet, dass** die temperaturbedingen Änderungen der magnetischen Eigenschaften der Synchronmaschine in der Lagezuordnung dadurch kompensiert werden, dass eine zur Richtung der Lageabhängigkeit der Induktivität oder Admittanz orthogonale Verschiebung der gemessenen Induktivität oder Admittanz genutzt wird, um die Gewichtung zwischen Lagezuordnungsparametern anzupassen, die für verschiedene Maschinentemperaturen gelten.

5. Verfahren nach Anspruch 3 oder 4, **dadurch gekennzeichnet, dass** die Lagezuordnungsparameter, die für verschiedene Maschinentemperaturen gelten, aus mehreren, bei verschiedenen Maschinentemperaturen gewonnenen Messdaten abgeleitet sind.

6. Verfahren nach einem der vorhergehenden Ansprüche, **dadurch gekennzeichnet, dass** mehrere Verläufe der Induktivität oder Admittanz über der Rotordrehung für jeweils verschiedene statorfeste Stromwerte in einem Modell hinterlegt sind oder in ein Modell einfließen, woraus im Betrieb gemäß der Strommessung ein aktuell gültiger Verlauf oder Parametersatz ausgewählt oder berechnet wird, mittels welchem dann der aktuell gemessenen Induktivität oder Admittanz ein Rotorlagewert zugeordnet wird.

7. Verfahren nach einem der vorhergehenden Ansprüche, **dadurch gekennzeichnet, dass** die Induktivität oder Admittanz durch drei Werte beschrieben ist, von denen eine ihren isotropen Anteil ($Y_\Sigma$) und zwei ihren statorfesten anisotropen Anteil beschreiben.

8. Verfahren nach einem der vorhergehenden Ansprüche, **dadurch gekennzeichnet, dass** zur Berechnung der Rotorlage ausschließlich die gemessene Induktivität oder Admittanz und der gemessen Stromvektor in Statorkoordinaten und die hinterlegten Lagezuordnungsparameter herangezogen werden und dass die geschätzte Rotorlage weder direkt noch indirekt zur Rotorlage-Zuordnung rückgeführt wird.

9.  Verfahren nach einem der vorhergehenden Ansprüche, **dadurch gekennzeichnet, dass** nach der Messung der zwei anisotropen Werte der Induktivität oder Admittanz in statorfesten Koordinaten ein hinterlegter vektorieller Verschiebungswert subtrahiert wird.

10. Verfahren nach einem der vorhergehenden Ansprüche, **dadurch gekennzeichnet, dass** die zwei anisotropen Werte der Induktivität oder Admittanz vor jeder weiteren Verwendung vom statorfesten Koordinatensystem in ein Koordinatensystem transformiert werden, das mit dem zweifachen Stromwinkel ausgerichtet ist.

11. Verfahren nach einem der vorhergehenden Ansprüche, **dadurch gekennzeichnet, dass** zur Zuordnung der gemessenen Induktivität oder Admittanz zur Rotorlage eine lineare Vorschrift verwendet wird, die einer Projektion des Messwertes auf die im Sollstromarbeitspunkt linearisierte tatsächliche Rotorlageabhängigkeit der Induktivität oder Admittanz entspricht.

12. Verfahren nach Anspruch 11, **dadurch gekennzeichnet, dass** eine Projektion des Messwerts auf die Tangente der tatsächlichen Rotorlageabhängigkeit der Induktivität oder Admittanz der linearen Vorschrift entspricht.

13. Verfahren nach einem der vorhergehenden Ansprüche, **dadurch gekennzeichnet, dass** die Lagezuordnungsparameter in Abhängigkeit vom Strombetrag und vom Stromwinkel hinterlegt werden.

14. Verfahren nach einem der vorhergehenden Ansprüche, **dadurch gekennzeichnet, dass** nur Lagezuordnungsparameter nur für einen Sektor des statorfesten Stromkoordinatensystems hinterlegt werden und dass die Lagezuordnung in den übrigen Sektoren durch Wiederholung des einen Sektors erfolgt.

15. Verfahren nach einem der vorhergehenden Ansprüche, **dadurch gekennzeichnet, dass** die Lagezuordnungsvorschrift für negative Drehmomente genau in der Weise aus den Parametern für positive Drehmomente abgeleitet wird, dass die Vorzeichen des ersten anisotropen Koeffizienten, des isotropen Koeffizienten und des Offsetkoeffizienten jeweils negiert werden.

16. Vorrichtung zur Steuerung und Regelung einer Drehfeldmaschine, umfassend einen Stator und einen Rotor, mit einem steuerbaren PWM-Umrichter zur Ausgabe von getakteten Klemmspannungen, mit einer Einrichtung zur Erfassung einer Anzahl von Phasenströmen und mit einem Controller zur Ansteuerung des PWM-Umrichters, der zur Durchführung des Verfahrens nach einem der vorhergehenden Ansprüche eingerichtet und ausgebildet ist.

17. Synchronmaschine, umfassend einen Stator und einen Rotor mit oder ohne Permanentmagnete, mit einer Vorrichtung zur Steuerung und/oder Regelung nach Anspruch 16.

**Claims**

1.  Method for assigning the inductance or admittance to the rotor position of a synchronous machine, comprising a stator and a rotor with or without permanent magnets, the synchronous machine being driven by means of clocked terminal voltages and the inductance or admittance being calculated from these and the measured current response, the course of the inductance or admittance over the rotor rotation under the boundary condition of an unchanged, at least two-dimensional current vector in stator coordinates as key information for position assignment, **characterized in that** the isotropic component of the admittance ($Y_\Sigma$) or inductance is used for position estimation exclusively at a current magnitude greater than a threshold value, and at a current magnitude smaller than the threshold value, the isotropic component of the admittance ($Y_\Sigma$) or inductance is used to correct a variable that contains the value of the isotropic component ($Y_\Sigma$) that applies to the zero current.

2.  Method according to claim 1, **characterized in that** the temperature-related changes in the magnetic properties of the synchronous machine in the position assignment are compensated, even without measurement data for the temperature dependence, by the fact that it is not the measured isotropic component ($Y_\Sigma$) itself which is entered into the position assignment, but the difference between this measured value and the tracked value of the isotropic component ($Y_\Sigma$) that applies to the zero current.

3.  Method according to claim 2, **characterized in that** the temperature-related changes in the magnetic properties of the synchronous machine in the position assignment are compensated by using the tracked value of the isotropic component ($Y_\Sigma$), that applies to zero current, in order to adapt the weighting between position assignment parameters which apply to different machine temperatures.

4. Method according to one of Claims 1 to 3, **characterized in that** the temperature-related changes in the magnetic properties of the synchronous machine in the position assignment are compensated by using a shift, orthogonal to the direction of the position dependency of the inductance or admittance of the measured inductance or admittance, in order to adapt the weighting between position assignment parameters which apply for different machine temperatures.

5. Method according to claim 3 or 4, **characterized in that** the position assignment parameters which apply for different machine temperatures are derived from a plurality of measurement data obtained at different machine temperatures.

6. Method according to one of the preceding claims, **characterized in that** a plurality of courses of the inductance or admittance over the rotor rotation for respectively different stator-fixed current values are stored in a model or incorporated into a model, from which a currently valid course or parameter set is selected or calculated during operation in accordance with the current measurement, by means of which a rotor position value is then assigned to the currently measured inductance or admittance is assigned to the currently measured inductance or admittance.

7. Method according to any of the preceding claims, **characterized in that** the inductance or admittance is described by three values, one of which describes its isotropic part ($Y_\Sigma$) and two of which describe its stator-fixed anisotropic part.

8. Method according to one of the preceding claims, **characterized in that** only the measured inductance or admittance and the measured current vector in stator coordinates and the stored position assignment parameters are used to calculate the rotor position and **in that** the estimated rotor position is not fed back either directly or indirectly for rotor position assignment.

9. Method according to one of the preceding claims, **characterized in that**, after measuring the two anisotropic values of inductance or admittance in stator-fixed coordinates, a stored vectorial displacement value is subtracted.

10. Method according to one of the preceding claims, **characterized in that** the two anisotropic values of the inductance or admittance are transformed, prior to each further use, from the stator-fixed coordinate system into a coordinate system which is aligned with twice the current angle.

11. Method according to one of the preceding claims, **characterized in that** a linear regulation is used to assign the measured inductance or admittance to the rotor position, which corresponds to a projection of the measured value onto the actual rotor position dependence of the inductance or admittance linearized at the desired current operating point.

12. Method according to claim 11, **characterized in that** a projection of the measured value onto the tangent of the actual rotor position dependence of the inductance or admittance corresponds to the linear regulation.

13. Method according to one of the preceding claims, **characterized in that** the position assignment parameters are stored as a function of the current magnitude and the current angle.

14. Method according to one of the preceding claims, **characterized in that** position assignment parameters are only stored for one sector of the stator-fixed current coordinate system, and **in that** the position assignment in the remaining sectors is carried out by repeating the one sector.

15. Method according to one of the preceding claims, **characterized in that** the rule for assigning the position for negative torques is derived from the parameters for positive torques in precisely such a way that the signs of the first anisotropic coefficient, of the isotropic coefficient and of the offset coefficient are reversed in each case.

16. A device for controlling and regulating a rotating-field machine, comprising a stator and a rotor, with a controllable PWM converter for outputting clocked terminal voltages, with a device for detecting a number of phase currents and with a controller for controlling the PWM converter, which is set up and designed to carry out the method according to one of the preceding claims.

17. A synchronous machine comprising a stator and a rotor with or without permanent magnets, with a control and/or regulation device according to claim 16.

**Revendications**

1. Procédé d'attribution de l'inductance ou de l'admittance à la position du rotor d'une machine synchrone, comprenant un stator et un rotor avec ou sans aimants permanents, la machine synchrone étant commandée par des tensions de serrage pulsées et l'inductance ou l'admittance étant calculée à partir de celles-ci et de la réponse en courant mesurée, l'évolution de l'inductance ou de l'admittance sur la rotation du rotor étant calculée sous la condition limite d'un vecteur de courant inchangé en coordonnées statoriques, vecteur de courant au moins bidimensionnel est utilisé comme information clé pour l'affectation de la position, **caractérisé en ce que** la composante isotrope de l'admittance ($Y_\Sigma$) ou de l'inductance est utilisée pour l'estimation de la position exclusivement dans le cas d'une valeur de courant supérieure à une valeur seuil et, dans le cas d'une valeur de courant inférieure à la valeur seuil, la composante isotrope de l'admittance ($Y_\Sigma$) ou de l'inductance est utilisée pour corriger une variable qui contient la valeur de la composante isotrope ($Y_\Sigma$) valable pour le courant nul.

2. Procédé selon la revendication 1, **caractérisé en ce que** les modifications des propriétés magnétiques de la machine synchrone dues à la température sont compensées dans l'attribution de position, même en l'absence de données de mesure relatives à la dépendance vis-à-vis de la température, par le fait que la part isotrope ($Y_\Sigma$) mesurée n'entre pas elle-même dans l'attribution de position, mais la différence entre cette valeur de mesure et la valeur de la part isotrope ($Y_\Sigma$) mise à jour et valable pour un courant nul.

3. Procédé selon la revendication 2, **caractérisé en ce que** les modifications des propriétés magnétiques de la machine synchrone dues à la température sont compensées dans l'attribution de position en utilisant la valeur mise à jour de la composante isotrope ($Y_\Sigma$) applicable au courant nul pour ajuster la pondération entre des paramètres d'attribution de position applicables à différentes températures de la machine.

4. Procédé selon l'une des revendications 1 à 3, **caractérisé en ce que** les modifications des propriétés magnétiques de la machine synchrone dues à la température sont compensées dans l'attribution de position en utilisant un décalage orthogonal à la direction de la dépendance de position de l'inductance ou de l'admittance mesurée pour ajuster la pondération entre des paramètres d'attribution de position qui s'appliquent à différentes températures de la machine.

5. Procédé selon la revendication 3 ou 4, **caractérisé en ce que** les paramètres d'attribution de position, qui sont valables pour différentes températures de machine, sont dérivés de plusieurs données de mesure obtenues à différentes températures de machine.

6. Procédé selon l'une des revendications précédentes, **caractérisé en ce que** plusieurs cours de l'inductance ou de l'admittance en fonction de la rotation du rotor pour respectivement différentes valeurs de courant statorique sont enregistrées dans un modèle ou sont intégrées dans un modèle, à partir duquel, en fonctionnement, une cours ou un jeu de paramètres actuellement valable est sélectionné ou calculé conformément à la mesure du courant, au moyen duquel une valeur de position du rotor est ensuite attribuée à l'inductance ou à l'admittance actuellement mesurée.

7. Procédé selon l'une des revendications précédentes, **caractérisé en ce que** l'inductance ou l'admittance est décrite par trois valeurs, dont une décrit sa partie isotrope ($Y_\Sigma$) et deux sa partie anisotrope fixée au stator.

8. Procédé selon l'une des revendications précédentes, **caractérisé en ce que**, pour le calcul de la position du rotor, on utilise exclusivement l'inductance ou l'admittance mesurée et le vecteur courant mesuré en coordonnées statoriques et les paramètres d'affectation de position déposés, et **en ce que** la position estimée du rotor n'est pas ramenée directement ou indirectement à l'affectation de position du rotor.

9. Procédé selon l'une des revendications précédentes, **caractérisé en ce qu'**après la mesure des deux valeurs anisotropes de l'inductance ou de l'admittance en coordonnées fixe au stator, on soustrait une valeur de décalage vectoriel déposée.

10. Procédé selon l'une des revendications précédentes, **caractérisé en ce que** les deux valeurs anisotropes de l'inductance ou de l'admittance sont transformées, avant toute autre utilisation, du système de coordonnées fixe au stator en un système de coordonnées aligné avec le double de l'angle de courant.

**11.** Procédé selon l'une des revendications précédentes, **caractérisé en ce que**, pour associer l'inductance ou l'admittance mesurée à la position du rotor, on utilise un règlement linéaire qui correspond à une projection de la valeur mesurée sur la dépendance effective de l'inductance ou de l'admittance par rapport à la position du rotor, linéarisée au point de fonctionnement de consigne du courant.

**12.** Procédé selon la revendication 11, **caractérisé en ce qu'**une projection de la valeur de mesure sur la tangente de la dépendance réelle de la position du rotor de l'inductance ou de l'admittance de le règlement linéaire correspond.

**13.** Procédé selon l'une des revendications précédentes, **caractérisé en ce que** les paramètres d'affectation de position sont enregistrés en fonction de la quantité de courant et de l'angle de courant.

**14.** Procédé selon l'une des revendications précédentes, **caractérisé en ce que** seuls des paramètres d'attribution de position sont enregistrés pour un secteur seulement du système de coordonnées de courant fixe au stator et **en ce que** l'attribution de position dans les autres secteurs s'effectue par répétition du secteur unique.

**15.** Procédé selon l'une des revendications précédentes, **caractérisé en ce que** la règle d'attribution de position pour les couples négatifs est déduite précisément des paramètres pour les couples positifs de telle sorte que les signes du premier coefficient anisotrope, du coefficient isotrope et du coefficient de décalage sont respectivement inversés.

**16.** Dispositif de commande et de régulation d'une machine à champ tournant, comprenant un stator et un rotor, avec un convertisseur PWM commandable pour la sortie de tensions de serrage synchronisées, avec un dispositif de détection d'un certain nombre de courants de phase et avec un contrôleur pour la commande du convertisseur PWM, qui est conçu et réalisé pour la mise en œuvre du procédé selon l'une des revendications précédentes.

**17.** Machine synchrone, comprenant un stator et un rotor avec ou sans aimants permanents, avec un dispositif de commande et/ou de régulation selon la revendication 16.

ohne Last        mit Last        kritisch

Fig. 1

Fig. 2

ohne Last        mit Last        kritisch

Fig. 3

ohne Last      mit Last      kritisch

Fig. 4

Fig. 5

ohne Last      mit Last      kritisch

Fig. 6

Fig. 7

Fig. 8

Fig. 9

Fig. 10

Fig. 11

Fig. 12

Fig. 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102016102635 A1
- DE 102015217986 A1
- WO 1992019038 A1
- WO 08041992 A1
- WO 1995017780 A1
- WO 2003015256 A1
- US 8217605 B2
- US 8228013 B2
- US 9197152 B2

### In der Beschreibung aufgeführte Nicht-Patentliteratur

- **M. SCHRÖDL**. Detection of the rotor position of a permanent magnet synchronous machine at standstill. *IEEE Conf. ICEM*, 1988, 51-56
- Transducerless position and velocity estimation in induction and salient ac machines. **P. L. JANSEN** ; **R. D. LORENZ**. IEEE Trans. on Industrial Applications. 1995, vol. 31, 240-247
- **M. J. CORLEY** ; **R. D. LORENZ**. Rotor position and velocity estimation for a salient-pole permanent magnet synchronous machine at standstill and high speeds. *IEEE Trans. on Industrial Applications*, 1998, vol. 34, 784-789
- **D. PAULUS** ; **P. LANDSMANN** ; **R. KENNEL**. Sensorless field- oriented control for permanent magnet synchronous machines with an arbitrary injection scheme and direct angle calculation. *IEEE Conf. SLED*, 2011, 41-46
- **D. PAULUS** ; **P. LANDSMANN** ; **S. KUEHL** ; **R. KENNEL**. Arbitrary injection for permanent magnet synchronous machines with multiple saliencies. *IEEE Conf. ECCE*, 2013
- **T. FRENZKE**. Impacts of cross-saturation on sensorless control of surface permanent magnet synchronous motors. *Conf. EPE, Dresden*, 2005
- **D. REIGOSA** ; **P. GARCIA** ; **D. RACA** ; **F. BRIZ** ; **R. D. LORENZ**. Measurement and Adaptive Decoupling of Cross-Saturation Effects and Secondary Saliencies in Sensorless-Controlled IPM Synchronous Machines. *IEEE Industry Applications Annual Meeting, New Orleans*, 2007
- **S. PAULUS** ; **G. GÖTTING**. Self-sensing control of permanent-magnet synchronous machines with reluctance and saturation effects using high-frequency signal injection. *APEC, Long Beach*, 2013
- **M. SCHRÖDL** ; **R. ENSBACHER**. *Verfahren und schaltungsanordnungen zur bestimmung maschinenbezogener elektromagnetischer und mechanischer zustandsgrössen an über umrichter gespeisten elektrodydynamischen drehfeldmaschinen*
- **P. L. JANSEN** ; **R. D. LORENZ**. *Method and apparatus for transducerless flux, position and velocity estimation in drives for ac machines*
- **M. M. WOGARI** ; **K. IDE** ; **M. SAWAMURA**. *Electric motor pole position sensing method, pole position sensing apparatus, and electric motor control apparatus using the same*
- **N. BIANCHI** ; **S. BOLOGNANI**. Influence of rotor geometry of an interior PM motor on sensorless control feasibility. *IEEE Conf. IAS Annual Meeting, 2005*
- **P. GUGLIELMI** ; **M. PASTORELLI** ; **A. VAGATI**. Cross-Saturation Effects in IPM Motors and Related Impact on Sensorless Control. *IEEE Trans. on Industry Applications,*, 2006, 1516-1522
- **O. C. FERREIRA** ; **R. KENNEL**. Encoderless Control of Industrial Servo Drives. *EPE/PEMC, Portoroz*, 2006
- **P. BALAZOVIC** ; **R. FILKA**. *Motor controller for determining a position of a rotor of an AC motor, AC motor system, and method of determining a position of a rotor of an AC motor*
- **J. LIU** ; **M. M. HARBAUGH** ; **T. A. NONDAHL** ; **P. B. SCHMIDT** ; **S. ROYAK**. *Method and apparatus for automatically identifying electrical parameters in a sensor-less PMSM*
- **C. Y. YU** ; **J. TAMURA** ; **D. REIGOSA** ; **R. D. LORENZ**. Position self-sensing evaluation of a FI-IPMSM based on high frequency signal injection methods. *IEEE Conf. ECCE, Phoenix*, 2011
- **L. CHEN** ; **G. GÖTTING** ; **S. DIETRICH** ; **I. HAHN**. Self-Sensing Control of Permanent-Magnet Synchronous Machines With Multiple Saliencies Using Pulse-Voltage-Injection. *IEEE Trans. on Industry Applications*, 2016, 3480-3491
- **T. S. SLININGER** ; **R. D. LORENZ**. Enhancing self-sensing estimation accuracy via negative sequence current image registration, with evaluation on a low saliency ratio machine. *IEEE Conf. SLED, Catania*, 2017

- **B. MEIER** ; **M. OETTMEIER** ; **J. O. FIEDLER** ; **T. BERTRAM**. Enabling sensorless control of a permanent magnet synchronous machine in the low speed region using saturation. *IEEE Conf. IECON, Florence*, 2016
- **W. HAMMEL** ; **P. LANDSMANN** ; **R. M. KENNEL**. Operating point dependent anisotropies and assessment for position-sensorless control. *EPE/ECCE Europe, Karlsruhe*, 2016
- **A. K. JEBAI** ; **F. MALRAIT** ; **P. MARTIN** ; **P. ROUCHON**. Sensorless position estimation of Permanent-Magnet Synchronous Motors using a nonlinear magnetic saturation model. *IEEE Conf. ICEM, Marseille*, 2012
- **A. JEBAI** ; **F. MALRAIT** ; **P. MARTIN** ; **R. ROUCHON**. *Control method implemented in a power converter and intended for identifying parameters linked to the magnetic saturation of an electric motor*
- **M. ROETZER** ; **U. VOLLMER** ; **L. CHEN** ; **R. KENNEL**. Anisotropy-based position estimation approach for symmetrical dual three-phase permanent magnet synchronous machines. *IEEE Conf. SLED, Catania*, 2017